# EUROPEAN PATENT APPLICATION

(11) **EP 4 495 866 A1**
(43) Date of publication of application: **22.01.2025**
(21) Application number: 23770333.5
(22) Date of filing: 24.02.2023
(51) Int. Cl.: G06Q 30/0601, G06T 19/00

(54) **INFORMATION PROCESSING DEVICE, INFORMATION PROCESSING SYSTEM, AND INFORMATION PROCESSING METHOD**

(30) Priority: 15.03.2022 JP 2022039932
(71) Applicant: Sony Group Corporation, Tokyo 108-0075 (JP)
(72) Inventor: TOKUTAKE, Kenji, Tokyo 108-0075 (JP)
(74) Representative: D Young & Co LLP
(86) International application number: PCT/JP2023/006805
(87) International publication number: WO 2023/176374

(57) **Abstract**

Provided are a device and a method in which a virtual object image of a product determined according to a user who enters a shop can be presented to the user, and a real product item can also be provided. A product to be presented is determined according to a user who enters a shop, and a mixed reality image in which a virtual object image of the determined product to be presented can be observed together with a real object in the shop is generated and output to a glass worn by a user who has entered the shop. The virtual object image of the product to be presented is sequentially updated according to a motion of the glass, and a mixed reality image is generated in which the product appears to be arranged in a product arrangement space in the shop. Moreover, in response to a request from the user, a real item of the product presented to the user is taken out from a warehouse and delivered to a user position in the shop.

## Description

### TECHNICAL FIELD

The present disclosure relates to an information processing device, an information processing system, and an information processing method. More specifically, the present disclosure relates to an information processing device, an information processing system, and an information processing method for realizing a shop in which various products can be observed using a mixed reality image displaying a virtual object that does not exist in a real space to appear to exist in the real space, and confirmation and purchase of a real product are also possible.

### BACKGROUND ART

In recent years, a cross-reality (XR) technology that causes a virtual object that does not exist in a real space to be perceived as if existing in a real space by fusing the real world and the virtual world has evolved, and provision of services using a virtual three-dimensional space different from the real world, a so-called metaverse space, is becoming active.

Many companies that sell products using real shops plan to sell products at virtual space shops.

In the product sales using the metaverse space, for example, three-dimensional images of products for sale are generated and provided to users (potential purchasers). The user can observe the product from various angles using the three-dimensional image of the product, and can experience an augmented reality as if looking at the real product.

Note that a system that provides such an augmented reality is described in, for example, Patent Document 1 (Japanese Patent Application Laid-Open No. 2010 -244575).

However, in the above-described related art and augmented reality providing systems disclosed so far, the user can only check a three-dimensional image of a product the user wants to purchase, and cannot actually touch or operate the product.

That is, there is a problem that the user cannot experience operability and a feel of the real product, and it is difficult to obtain sufficient information for making a decision to purchase the product.

### CITATION LIST

### PATENT DOCUMENT

Patent Document 1: Japanese Patent Application Laid-Open No. 2010-244575

### SUMMARY OF THE INVENTION

### PROBLEMS TO BE SOLVED BY THE INVENTION

The present disclosure has been made in view of the problems described above, for example, and is to provide an information processing device, an information processing system, and an information processing method for realizing a shop in which various products can be observed using a mixed reality image displaying a virtual object that does not exist in a real space to appear to exist in the real space, and confirmation and purchase of a real product are also possible.

### SOLUTIONS TO PROBLEMS

A first aspect of the present disclosure is an information processing device including:
a data processing unit configured to generate a mixed reality image to be output to a display unit of a glass worn by a user who enters a shop, in which
the data processing unit
determines a product to be presented in accordance with a user who enters the shop, and
generates a mixed reality image that enables observation of a virtual object image of the determined product to be presented, together with a real object in the shop.

Moreover, a second aspect of the present disclosure is an information processing system including:
a glass configured to enable observation of a mixed reality image; and
a server configured to communicate with the glass, in which
the glass is a glass worn by a user who enters a shop, and
the server
determines a product to be presented in accordance with a user who has entered the shop, and
outputs a mixed reality image that enables observation of a virtual object image of the determined product to be presented, together with a real object in the shop, to a display unit of a glass worn by the user who has entered the shop.

Moreover, a third aspect of the present disclosure is
an information processing method to be executed in an information processing device,
the information processing device including:
   a data processing unit configured to generate a mixed reality image to be output to a display unit of a glass worn by a user who enters a shop,
   the data processing method including,
   by the information processing unit:
      determining a product to be presented in accordance with a user who enters the shop; and
      generating a mixed reality image that enables observation of a virtual object image of the determined product to be presented, together with a real object in the shop.

Other objects, features, and advantages of the present disclosure will become apparent from the detailed description based on the embodiments of the present disclosure described later and the accompanying drawings. Note that, in the present specification, a system is a logical set configuration of a plurality of devices, and is not limited to one in which devices of individual configurations are in the same housing.

According to a configuration of an embodiment of the present disclosure, a device and a method are realized in which a virtual object image of a product determined according to a user who enters a shop can be presented to the user, and a real product item can also be provided.

Specifically, for example, a product to be presented is determined according to a user who enters a shop, and a mixed reality image in which a virtual object image of the determined product to be presented can be observed together with a real object in the shop is generated and output to a glass worn by the user who has entered the shop. The virtual object image of the product to be presented is sequentially updated according to a motion of the glass, and a mixed reality image is generated in which the product appears to be arranged in a product arrangement space in the shop. Moreover, in response to a request from the user, a real item of the product presented to the user is taken out from a warehouse and delivered to a user position in the shop.

This configuration realizes a device and a method in which a virtual object image of a product determined according to a user who enters a shop can be presented to the user, and a real product item can also be provided.

Note that the effects described herein are merely examples and are not limited, and additional effects may also be provided.

### BRIEF DESCRIPTION OF DRAWINGS

Fig. 1 is a diagram for explaining an example of configurations of an information processing system and an information processing device of the present disclosure and processing to be executed.
Fig. 2 is a diagram for explaining an example of configurations of the information processing system and the information processing device of the present disclosure and processing to be executed.
Fig. 3 is a diagram for explaining an example of configurations of the information processing system and the information processing device of the present disclosure and processing to be executed.
Fig. 4 is a diagram for explaining an example of configurations of the information processing system and the information processing device of the present disclosure and processing to be executed.
Fig. 5 is a diagram for explaining an example of configurations of the information processing system and the information processing device of the present disclosure and processing to be executed.
Fig. 6 is a diagram for explaining real product delivery and presentation processing as an example of processing executed by the information processing system of the present disclosure.
Fig. 7 is a diagram for explaining the real product delivery and presentation processing as an example of processing executed by the information processing system of the present disclosure.
Fig. 8 is a diagram for explaining the real product delivery and presentation processing as an example of processing executed by the information processing system of the present disclosure.
Fig. 9 is a diagram for explaining the real product delivery and presentation processing as an example of processing executed by the information processing system of the present disclosure.
Fig. 10 is a diagram for explaining product color change processing as an example of processing executed by the information processing system of the present disclosure.
Fig. 11 is a diagram for explaining the product color change processing as an example of processing executed by the information processing system of the present disclosure.
Fig. 12 is a diagram for explaining product try-on image presentation processing as an example of processing executed by the information processing system of the present disclosure.
Fig. 13 is a diagram for explaining the product try-on image presentation processing as an example of processing executed by the information processing system of the present disclosure.
Fig. 14 is a diagram for explaining the product try-on image presentation processing as an example of processing executed by the information processing system of the present disclosure.
Fig. 15 is a diagram for explaining the product try-on image presentation processing as an example of processing executed by the information processing system of the present disclosure.
Fig. 16 is a diagram for explaining a configuration example using a plurality of remote servers which is an example of the information processing system of the present disclosure.
Fig. 17 is a diagram for explaining a configuration example not using a remote server which is an example of the information processing system of the present disclosure.
Fig. 18 is a diagram for explaining an example of a display image of an MR glass worn by an operator of the remote server.
Fig. 19 is a diagram for explaining an example of a display image of the MR glass worn by the operator of the remote server in a case where there is a plurality of shop visitors to a shop.
Fig. 20 is a diagram for explaining processing in a case where there is a plurality of shop visitors in a shop.
Fig. 21 is a diagram for explaining processing in a case where there is a plurality of shop visitors in a shop.
Fig. 22 is a flowchart illustrating a sequence of processing executed by the information processing system of the present disclosure.
Fig. 23 is a flowchart illustrating a sequence of processing executed by the information processing system of the present disclosure.
Fig. 24 is a flowchart illustrating a sequence of processing executed by the information processing system of the present disclosure.
Fig. 25 is a diagram for explaining a configuration example of the information processing device constituting the information processing system of the present disclosure.
Fig. 26 is a diagram for explaining a configuration example of the information processing device constituting the information processing system of the present disclosure.
Fig. 27 is a diagram for explaining a hardware configuration example of the information processing device according to the present disclosure.

### MODE FOR CARRYING OUT THE INVENTION

Hereinafter, an information processing device, an information processing system, and an information processing method of the present disclosure will be described in detail with reference to the drawings. Note that the description will be given in the following order.
1. Configuration and processing example of information processing system of present disclosure
   1-(1) Phase of observation processing on product (virtual object image)
   1-(2) Phase of confirmation and purchase processing on real product (real object)
2. Example of information presented to MR glass worn by user
   2-(1) (Second embodiment) Embodiment of displaying remaining allowable time of confirmation time for real object
   2-(2) (Third embodiment) Embodiment of displaying virtual object in different color of real object (clothes, etc.) being confirmed by user
   2-(3) (Fourth embodiment) Embodiment of displaying try-on example of real object (clothes, etc.) to user
▪3. Other embodiments
4. Processing example in case where there is plurality of potential purchaser users for different types of products in shop
5. Sequence of processing executed by information processing system of present disclosure
6. Configuration example of information processing device constituting information processing system of present disclosure
7. Hardware configuration example of information processing device
8. Conclusion of configuration of present disclosure

### [1. (First embodiment) Configuration and processing example of information processing system of present disclosure]

First, a configuration and a processing example of an information processing system of the present disclosure will be described as a first embodiment.

Note that, in the information processing system of the present disclosure, the following two processing phases are sequentially executed.
(1) Phase of observation processing on product (virtual object image)
(2) Phase of confirmation and purchase processing on real product (real object)

Hereinafter, these individual processing phases will be sequentially described.

### (1-(1) Phase of observation processing on product (virtual object image))

First, the "(1) Phase of observation processing on product (virtual object image)" executed by the information processing system of the present disclosure will be described.

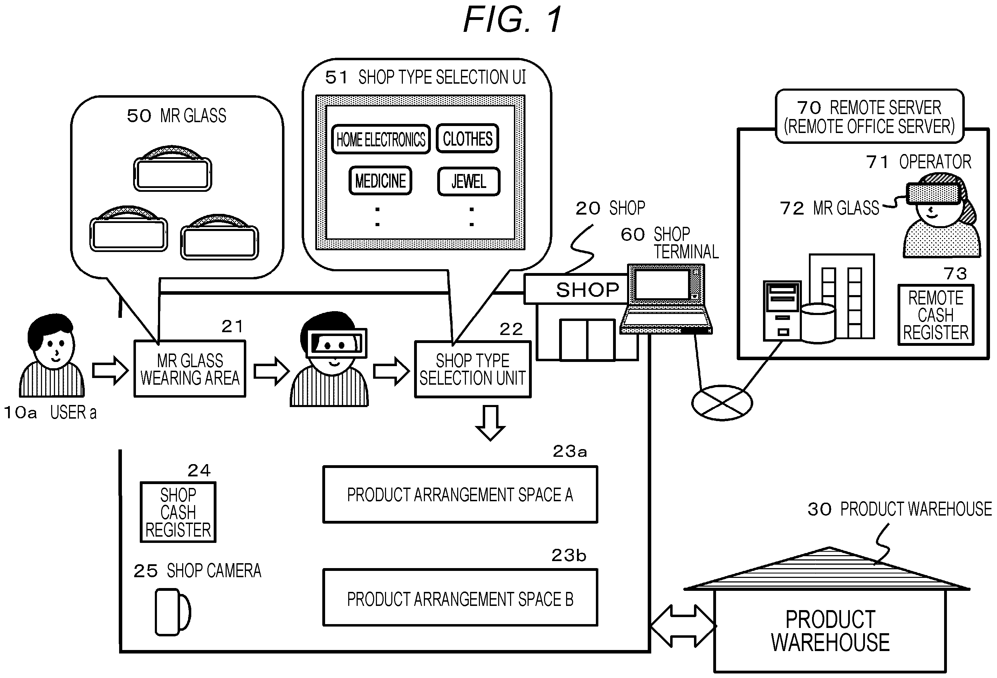

Fig. 1 is a diagram illustrating a configuration example of the information processing system of the present disclosure.

Fig. 1 illustrates a shop 20 and a user a, 10a (= potential purchaser) who enters the shop 20 in order to purchase a product.

The shop 20 is a shop that actually exists in a real space. For example, the shop 20 is a real shop that exists at a location such as an urban area or near a station.

The shop 20 is provided with a product warehouse 30. The product warehouse 30 stores products to be sold in the shop 20.

A shop terminal 60 is placed in the shop 20, and the shop terminal 60 is configured to be able to communicate with an external remote server 70 (= remote office server).

As illustrated in the figure, the shop 20 is provided with an MR glass wearing area 21, a shop type selection unit 22, a product arrangement space 23, a shop cash register 24, and a shop camera 25. Moreover, the shop terminal 60 described above is provided.

As described above, the shop terminal 60 has a configuration capable of communicating with the external remote server 70 (= remote office server), and further has a configuration capable of communicating with the shop type selection unit 22, the shop cash register 24, and the shop camera 25.

In the product arrangement space 23, no product is placed when the user a, 10a enters the shop.

First, the user a, 10a who is going to purchase a product wears an MR glass 50 in the MR glass wearing area 21.

The MR glass 50 is a glass that displays a mixed reality (MR) image in which an image of a virtual object that does not actually exist is superimposed on a real object in a real space or on an image of the real object. For example, the MR glass 50 is a head mount display (HMD) .

Note that the MR glass 50 illustrated in Fig. 1 is a transmissive MR glass, and has a transmissive display unit. A user 10 can observe various objects in front of the user 10, that is, real objects, through the transmissive display unit of the MR glass 50 similarly to viewing with a naked eye.

Furthermore, a three-dimensional image of a virtual object that does not exist in the real space is displayed on the transmissive display unit.

That is, through the MR glass 50, the user 10 can observe the real object and the virtual object together.

The user a, 10a observes a product shelf in a product arrangement space A, 23a of the shop 20 illustrated in Fig. 1, as a real object through the transmissive display unit of the MR glass 50.

Moreover, an image of a product placed on the product shelf in the product arrangement space A, 23a can be observed as a virtual object displayed on the transmissive display unit of the MR glass 50.

Note that the product image displayed as a virtual object on the transmissive display unit of the MR glass 50 is three-dimensional image data.

The display image (virtual object image) is also sequentially updated according to a motion of the user a, 10a, and the user a, 10a can observe the product (virtual object) from different directions. In other words, the user a, 10a can observe the product while experiencing augmented reality similar to a state where the product is actually in front of the eyes.

The motion of the user a, 10a is analyzed using a captured image obtained by a camera mounted to the MR glass 50 and detection information of a sensor such as an inertial measurement unit (IMU) mounted to the MR glass 50.

Note that the IMU is a motion sensor capable of simultaneously measuring accelerations in xyz three-axis directions, angular velocities around the xyz three axes, and the like.

The product image (virtual object image) to be displayed on the transmissive display unit of the MR glass 50 is sequentially updated in accordance with the motion of the user a, 10a analyzed in accordance with the camera-captured image and the sensor detection value of the IMU and the like.

That is, a direction, a size, and the like of the three-dimensional image (virtual object) to be displayed on a display unit 108 of an MR glass 100 are sequentially updated on the basis of the motion of the user a, 10a analyzed according to the camera-captured image and the sensor detection value of the IMU or the like.

For example, in a case where the product that the user 10 intends to purchase is a home electric appliance, the user a, 10a can observe, through the MR glass 50, an MR image in which various home electric appliances (virtual objects) are arranged on the product shelf (real object) of the product arrangement space A, 23a.

Note that the MR glass 50 illustrated in Fig. 1 is a transmissive MR glass, but the processing of the present disclosure is not limited to the transmissive MR glass, and a non-transmissive MR glass can also be used. In a configuration using a non-transmissive MR glass, an image of a real object image in a line-of-sight direction of the user a, 10a is captured by the camera mounted to the non-transmissive MR glass, and an MR image in which a virtual object image is superimposed on the real object image is displayed on a display unit of the non-transmissive MR glass.

For example, a camera-captured image of the product shelf in the product arrangement space A, 23a of the shop 20 illustrated in Fig. 1 is displayed as a real object image on the display unit of the non-transmissive MR glass, and a three-dimensional image of a product is displayed as a virtual object image on the product shelf in the product arrangement space A, 23a.

In the configuration using the non-transmissive MR glass, such an MR image is displayed.

In this way, the processing of the present disclosure is not limited to the transmissive MR glass, and a configuration using non-transmissive MR glass is also possible. Furthermore, the processing of the present disclosure is not limited to the MR image, and a configuration using another augmented reality image (AR image) or virtual reality image (VR image) is also possible.

Note that, in the following embodiment, an embodiment of displaying an MR image by using the transmissive MR glass 50 will be described as a representative example.

Note that the transmissive MR glass 50 also has a camera. The camera of the MR glass 50 worn by the user 10 captures an image in a line-of-sight direction of the user, and the captured image is transmitted to the remote server 70 via the shop terminal 60.

The captured image obtained by the shop camera 25 is also transmitted to the remote server 70 via the shop terminal 60.

Note that, although one shop camera 25 is illustrated in the figure, the shop camera 25 is attached to various positions of the shop 20. The shop camera 25 is configured to be capable of capturing images from a plurality of different directions necessary for generating a three-dimensional image of the inside of the shop 20 and a three-dimensional image of the user 10 in the shop 20. All the images captured by the plurality of shop cameras 25 are transmitted to the remote server 70.

As illustrated in Fig. 1, there is an operator 71 at the remote server 70. The operator 71 also wears an MR glass 72, and can observe, through the MR glass 72, the product arrangement space 23 inside the shop 20, a real object including the user a, 10a, and an MR image including a three-dimensional image (virtual object image) of the product.

That is, the operator 71 can observe, through the MR glass 72, an MR image similar to the MR image observed by the user 10a in the shop 20 through the MR glass 50.

After wearing the MR glass 50 in the MR glass wearing area 21, the user a, 10a proceeds to the shop type selection unit 22. Here, by using a shop type selection UI 51 as illustrated in the figure, the user a, 10a selects a type of shop that provides a product that the user a, 10a desires to purchase.

For example, in a case where the user a, 10a wants to purchase a home electric appliance such as a television or a refrigerator, the user a, 10a selects "home electronics". Furthermore, in a case where the user a, 10a wants to purchase clothes, the user a, 10a selects "clothes".

The shop information selected by the user a, 10a in the shop information selection unit 22 is transmitted to the remote server 70 via the shop terminal 60.

The remote server 70 determines a product (virtual object) to be displayed in the product arrangement space 23 in accordance with the shop information selected by the user a, 10a, generates three-dimensional image data of the determined product (virtual object), and outputs the three-dimensional image data to the MR glass 50 worn by the user a, 10a via the shop terminal 60, to display.

Note that, as described above, the product image displayed as the virtual object is three-dimensional image data. The product image (virtual object image) to be displayed on the transmissive display unit of the MR glass 50 is also sequentially updated in accordance with a motion of the user a, 10a, and the user a, 10a can observe the product (virtual object) from different directions. In other words, the user a, 10a can observe the product while experiencing augmented reality similar to a state where the product is actually in front of the eyes.

A captured image obtained by the camera mounted to the MR glass 50 and a sensor detection value of the IMU mounted to the MR glass 50 are transmitted to the remote server 70 via the shop terminal 60. The remote server 70 analyzes a motion of the user a, 10a in accordance with the camera-captured image and the sensor detection value of the IMU and the like, and sequentially updates a direction and a size of the product image (virtual object image) displayed on the MR glass 50 in accordance with an analysis result.

Note that a three-dimensional image (virtual object image) of a product similar to that output onto the MR glass 50 worn by the user a, 10a is also displayed on the MR glass 72 worn by the operator 71 of the remote server 70.

Note that, in the embodiment described below, a processing example will be described in which the remote server 70 executes generation processing for a virtual object such as three-dimensional image data of a product or generation processing for an MR image, but this is an example. Without limiting to the remote server 70, for example, the shop terminal 60 or the MR glass 50 may be configured to execute the generation processing for the virtual object such as three-dimensional image data of a product and the generation processing for the MR image.

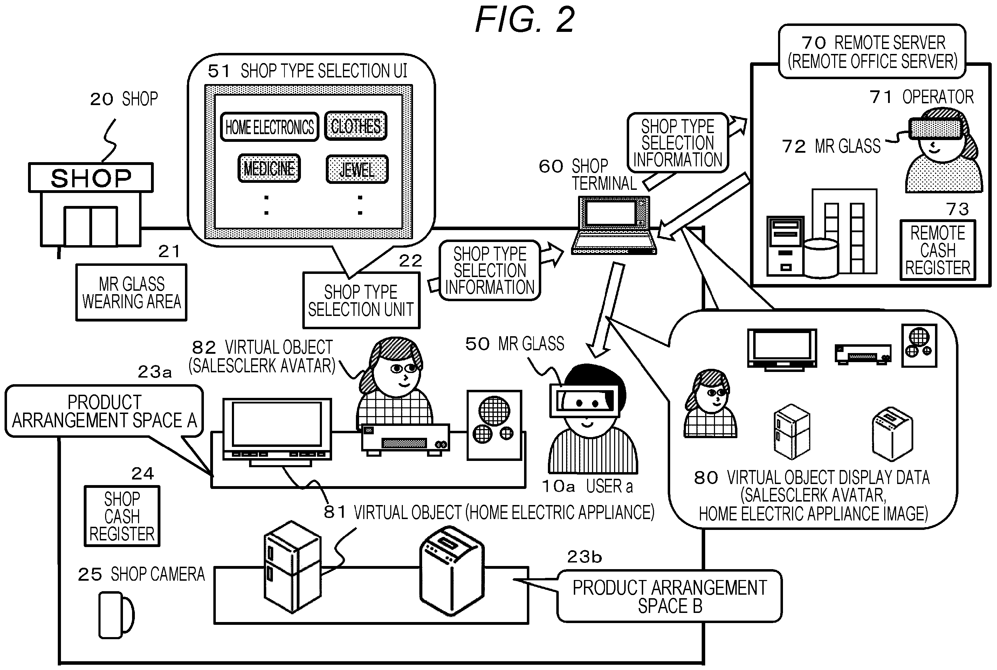

Next, with reference to Fig. 2, a processing example in a case where the user a, 10a selects the shop type = "home electronics" in the shop type selection unit 22 will be described.

After wearing the MR glass 50 in the MR glass wearing area 21, the user a, 10a proceeds to the shop type selection unit 22. Here, by using the shop type selection UI 51 as illustrated in Fig. 2, the user a, 10a selects "home electronics" as the type of shop that provides the product that the user a, 10a desires to purchase.

The shop type selection information is transmitted to the remote server 70 via the shop terminal 60.

The remote server 70 determines a product (virtual object) to be displayed in the product arrangement space 23 as a home electric appliance such as a television, a refrigerator, or a washing machine in accordance with the shop type selection information selected by the user a, 10a, generates a three-dimensional image of these products, and outputs the three-dimensional image to the MR glass 50 worn by the user a, 10a via the shop terminal 60, to display.

This corresponds to a virtual object (home electric appliance) 81 illustrated in Fig. 2.

Note that the remote server 70 further generates a salesclerk avatar which is three-dimensional virtual image data of a salesclerk who serves the user a, 10a, and outputs the salesclerk avatar to the MR glass 50 worn by the user a, 10a via the shop terminal 60, to display.

This corresponds to a virtual object (salesclerk avatar) 82 illustrated in Fig. 2.

As illustrated in Fig. 2, the remote server 70 generates virtual object display data (salesclerk avatar, home electric appliance image) 80, and outputs the virtual object display data (salesclerk avatar, home electric appliance image) 80 to the MR glass 50 worn by the user a, 10a via the shop terminal 60, to display.

The virtual object (home electric appliance) 81 and the virtual object (salesclerk avatar) 82 illustrated in Fig. 2 are not real objects existing in the shop 20, but are virtual objects output and displayed on the MR glass 50 worn by the user a, 10a.

Note that a three-dimensional image (virtual object image) of a product similar to that output onto the MR glass 50 worn by the user a, 10a is also displayed on the MR glass 72 worn by the operator 71 of the remote server 70.

On the MR glass 72 worn by the operator 71 of the remote server 70, for example, a real object image inside the shop 20 observed from a viewpoint position of the virtual object (salesclerk avatar) 82 output on the MR glass 50 worn by the user a, 10a and a three-dimensional image (virtual object image) of the product are displayed.

Furthermore, the MR glass 72 worn by the operator 71 may be configured to display a real object image of the entire shop observed from above and the three-dimensional image (virtual object image) of the product. Alternatively, shop images from various directions may be switched as appropriate.

Note that the real object image displayed on the MR glass 72 worn by the operator 71 is generated, for example, on the basis of a captured image obtained by the shop camera 25.

These captured image is transmitted to the remote server 70 via the shop terminal 60.

Furthermore, the MR glass 50 worn by the user a, 10a and the MR glass 72 worn by the operator 71 of the remote server 70 are provided with a voice input/output unit (microphone, speaker).

The virtual object (salesclerk avatar) 82 output on the MR glass 50 worn by the user a, 10a is a salesclerk avatar corresponding to the operator 71 of the remote server 70. The user a, 10a can have a conversation with the operator 71 of the remote server 70 as if having a conversation with the virtual object (salesclerk avatar) 82 output on the MR glass 50.

For example, in a case where the user a, 10a requests product explanation from the salesclerk avatar 82, the operator 71 of the remote server 70 can perform the product explanation, and the user a, 10a can receive the product explanation from the operator 71 with a feeling similar to that of receiving the explanation from the salesclerk existing in the shop.

As described above, the virtual object (home electric appliance) 81 and the virtual object (salesclerk avatar) 82 illustrated in Fig. 2 are not real objects existing in the shop 20, but are virtual objects output and displayed on the MR glass 50 worn by the user a, 10a, and these do not exist in the shop 20.

The user a, 10a is a user who has entered the shop 20 in order to purchase a home electric appliance, and various users other than the user a, 10a come to the shop 20. For example, various users visit the shop, such as a user who comes to buy clothes and a user who comes to buy a medicine.

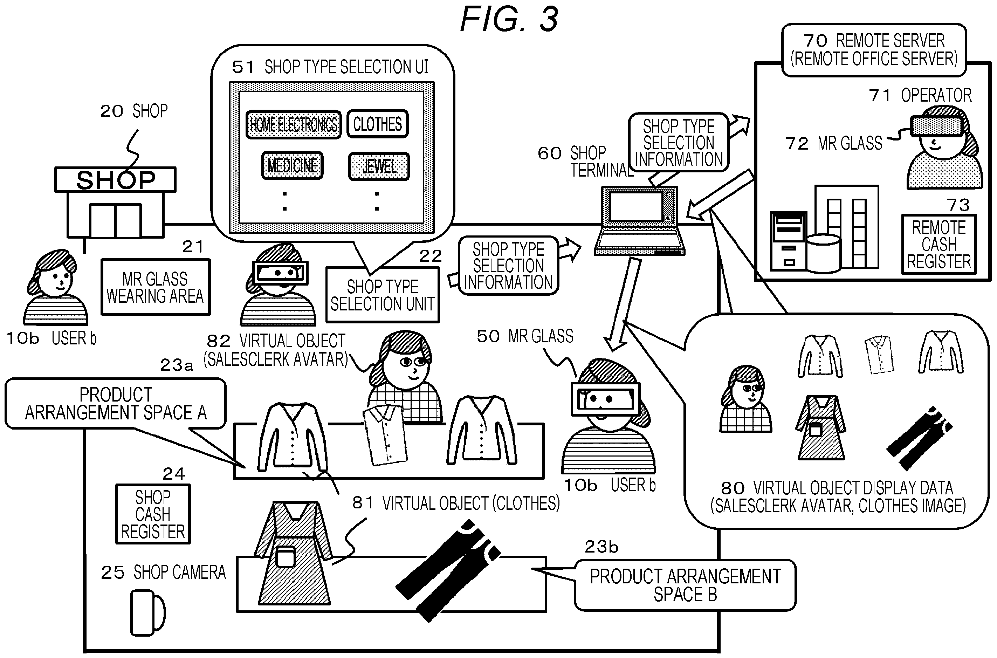

A processing example in a case where a user b, 10b who has come to buy clothes has visited the shop will be described with reference to Fig. 3.

After wearing the MR glass 50 in the MR glass wearing area 21, the user b, 10b illustrated in Fig. 3 proceeds to the shop type selection unit 22. Here, by using the shop type selection UI 51 as illustrated in the figure, the user b, 10b selects "clothes" as the type of shop that provides the product the user b, 10b desires to purchase.

The shop type selection information is transmitted to the remote server 70 via the shop terminal 60.

The remote server 70 determines a product (virtual object) to be displayed in the product arrangement space 23 as clothes such as a shirt or a skirt in accordance with the shop type selection information selected by the user b, 10b, generates a three-dimensional image of these products, and outputs the three-dimensional image to the MR glass 50 worn by the user b, 10b via the shop terminal 60, to display.

This corresponds to a virtual object (clothes) 81 illustrated in Fig. 3.

Note that the remote server 70 further generates a salesclerk avatar which is three-dimensional virtual image data of a salesclerk who serves the user b, 10b, and outputs the salesclerk avatar to the MR glass 50 worn by the user b, 10b via the shop terminal 60, to display.

This corresponds to the virtual object (salesclerk avatar) 82 illustrated in Fig. 3.

As illustrated in Fig. 3, the remote server 70 generates virtual object display data (salesclerk avatar, clothes image) 80, and outputs the virtual object display data (salesclerk avatar, clothes image) 80 to the MR glass 50 worn by the user b, 10b via the shop terminal 60, to display.

The virtual object (clothes) 81 and the virtual object (salesclerk avatar) 82 illustrated in Fig. 3 are not real objects existing in the shop 20, but are virtual objects output and displayed on the MR glass 50 worn by the user b, 10b.

A three-dimensional image (virtual object image) of a product similar to that output onto the MR glass 50 worn by the user b, 10b is also displayed on the MR glass 72 worn by the operator 71 of the remote server 70.

Note that there is a plurality of operators 71 at the remote server 70, and for example, one operator 71 (salesclerk avatar) corresponds to each user who has entered the shop 20. In a case where there are many users who have entered the shop, there is a case where the user may be requested to wait for a response by the operator 71 (salesclerk avatar). During the waiting, the virtual object (salesclerk avatar) 82 may not be displayed on the MR glass 50 worn by the user 10.

As described above, the MR glass 50 worn by the user 10 and the MR glass 72 worn by the operator 71 of the remote server 70 are provided with the voice input/output unit (microphone, speaker), and can have a conversation with each other. Therefore, when the user 10 utters that he/she wants to have a conversation with the salesclerk (operator 71), the operator 71 available for the conversation can respond to give a notification that waiting is required temporarily.

In the example illustrated in Fig. 3, the user b, 10b is a user who intends to purchase clothes, and the virtual object (salesclerk avatar) 82 that serves the user b, 10b gives explanation on the clothes and the like in response to a request from the user b, 10b.

As described above, on the MR glass 72 worn by the operator 71 of the remote server 70, for example, a real object image inside the shop 20 observed from a viewpoint position of the virtual object (salesclerk avatar) 82 output on the MR glass 50 worn by the user b, 10b and a three-dimensional image (virtual object image) of clothes as the product are displayed.

The operator 71 of the remote server 70 can respond to an explanation request from the user b, 10b while observing,, simultaneously with the user b, 10b, the three-dimensional image (virtual object image) of the clothes for which the user b, 10b requests explanation.

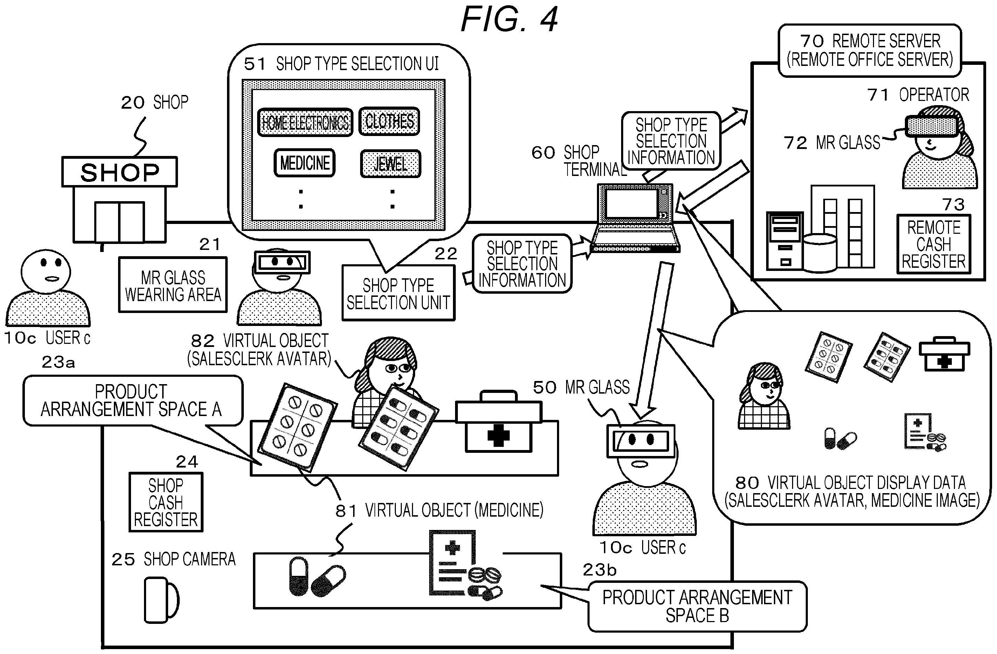

Next, a processing example in a case where a user c, 10c who has visited the shop 20 to buy a medicine visits the shop will be described with reference to Fig. 4.

After wearing the MR glass 50 in the MR glass wearing area 21, the user c, 10c illustrated in Fig. 4 proceeds to the shop type selection unit 22. Here, by using the shop type selection UI 51 as illustrated in the figure, the user c, 10c selects "medicine" as the type of shop that provides the product the user c, 10c desires to purchase.

The shop type selection information is transmitted to the remote server 70 via the shop terminal 60.

The remote server 70 determines a product (virtual object) to be displayed in the product arrangement space 23 as a medicine such as a cold medicine or eye drops in accordance with the shop type selection information selected by the user c, 10c, generates a three-dimensional image of these products, and outputs the three-dimensional image to the MR glass 50 worn by the user c, 10c via the shop terminal 60, to display.

This corresponds to a virtual object (medicine) 81 illustrated in Fig. 4.

Note that the remote server 70 further generates a salesclerk avatar which is three-dimensional virtual image data of a salesclerk who serves the user c, 10c, and outputs the salesclerk avatar to the MR glass 50 worn by the user c, 10c via the shop terminal 60, to display.

This corresponds to the virtual object (salesclerk avatar) 82 illustrated in Fig. 4.

As illustrated in Fig. 4, the remote server 70 generates virtual object display data (salesclerk avatar, medicine image) 80, and outputs the virtual object display data (salesclerk avatar, medicine image) 80 to the MR glass 50 worn by the user c, 10c via the shop terminal 60, to display.

The virtual object (medicine) 81 and the virtual object (salesclerk avatar) 82 illustrated in Fig. 4 are not real objects existing in the shop 20, but are virtual objects output and displayed on the MR glass 50 worn by the user c, 10c.

A three-dimensional image (virtual object image) of a product similar to that output onto the MR glass 50 worn by the user c, 10c is also displayed on the MR glass 72 worn by the operator 71 of the remote server 70.

In the example illustrated in Fig. 4, the user c, 10c is a user who intends to purchase a medicine, and the virtual object (salesclerk avatar) 82 that serves the user c, 10c gives explanation on the medicine and the like in response to a request from the user c, 10c.

As described above, on the MR glass 72 worn by the operator 71 of the remote server 70, for example, a real object image inside the shop 20 observed from a viewpoint position of the virtual object (salesclerk avatar) 82 output on the MR glass 50 worn by the user c, 10c and a three-dimensional image (virtual object image) of a medicine as the product are displayed.

The operator 71 of the remote server 70 can respond to an explanation request from the user c, 10c while observing,, simultaneously with the user c, 10c, the three-dimensional image (virtual object image) of the medicine for which the user c, 10c requests explanation.

### (1-(2) Phase of confirmation and purchase processing on real product (real object))

Next, the "(2) Phase of confirmation and purchase processing on real product (real object)" executed by the information processing system of the present disclosure will be described.

In the information processing system of the present disclosure, first, in the "(1) Phase of observation processing on product (virtual object image)" described above, a three-dimensional image of a product that the user 10 desires to purchase is displayed as a virtual object image on the MR glass 50 worn by the user 10. This processing allows the user 10 to observe the product from various angles.

That is, as described with reference to Figs. 1 to 4, the three-dimensional image of the product that the user 10 desires to purchase is displayed as a virtual object image on the MR glass 50 worn by the user 10, whereby the user 10 can observe the product from various angles.

In the information processing system of the present disclosure, after the "(1) Phase of observation processing on product (virtual object image)", for example, in a case where the user 10 actually wants to see and confirm a real item, the real item is delivered to the front of the user 10 in the shop 20. Furthermore, in a case where the user 10 desires to purchase the product, it is also possible to purchase the product in the shop 20 and bring it home.

That is, "(2) Phase of confirmation and purchase processing on real product (real object)" is executed.

Hereinafter, details of the "(2) Phase of confirmation and purchase processing on real product (real object)" executed by the information processing system of the present disclosure will be described.

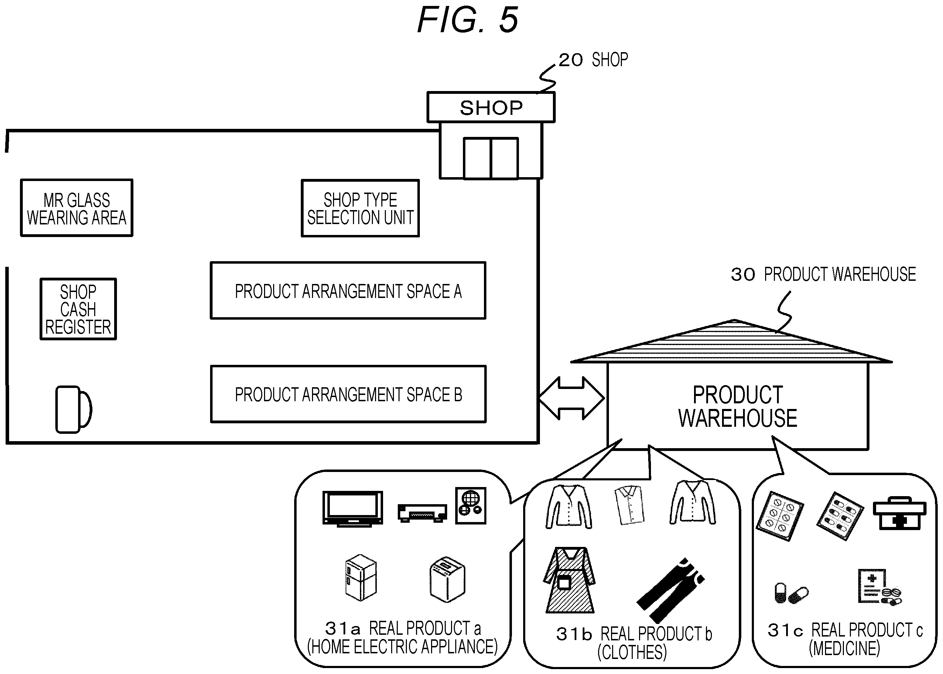

As illustrated in Fig. 5, the product warehouse 30 is provided near the shop 20.

The product warehouse 30 stores real items (real products) of various products presented as virtual objects to the user 10 in the shop 20.

As illustrated in Fig. 5, real items (real products) of various products to be presented to the user 10 in the shop 20 are stored, such as a real product a (home electric appliance) 31a such as a television and a refrigerator, a real product b (clothes) 31b such as a shirt and a dress, and a real product c (medicine) 31c such as a disinfectant and a cold medicine.

In the information processing system of the present disclosure, in a case where there is a request from the user 10 in the shop 20 to see and confirm a real item of a product or the user 10 wants to purchase the product, the product is carried out from the product warehouse 30 and delivered to the user 10 in the shop 20.

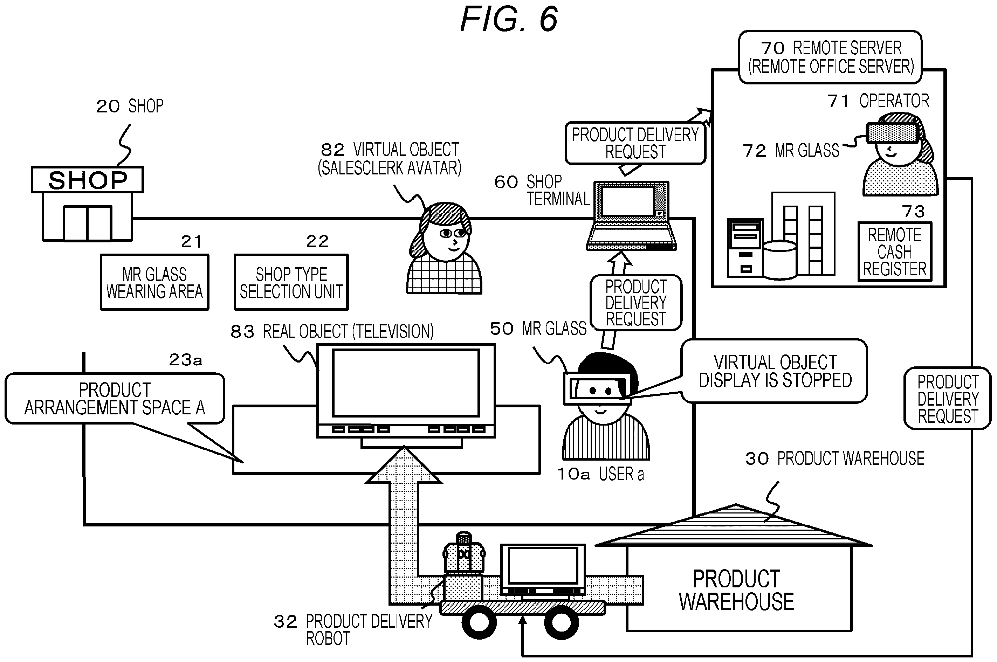

A specific example of this processing will be described with reference to Fig. 6.

Fig. 6 illustrates the user a, 10a described above with reference to Fig. 2. The user a, 10a is a user who has come to the shop 20 in order to purchase a home electric appliance.

It is assumed that the user a, 10a has observed three-dimensional image data (virtual objects) of various home electric appliances through the processing described above with reference to Fig. 2, and wants to confirm a real item of one television that has attracted interest after the observation processing.

The user a, 10a tells the salesclerk avatar (virtual object) 82 who is serving that the user a, 10a wants to confirm the real item of the television.

Specifically, the processing corresponds to processing of making a conversation with the operator 71 of the remote server 70 via the voice input/output unit (microphone, speaker) of the MR glass 50 and telling that the user a, 10a wants to confirm the real item of the television.

Upon receiving a product confirmation request from the user a, 10a, the operator 71 of the remote server 70 transmits a delivery request for the product designated by the user, from the remote server 70 to a product delivery robot 32 that is waiting in the product warehouse 30.

In response to reception of the product delivery request from the remote server 70, the product delivery robot 32 in the product warehouse 30 takes out the designated product (television) from the product warehouse 30, and delivers the designated product to the front of the user a, 10a in the shop 20.

By this processing, a real object (television) 83 illustrated in Fig. 6 is delivered to the front of the user a, 10a in the shop 20.

The user a, 10a can perform processing such as viewing with a naked eye and operating the real item of the television.

After confirming the real item described above, when the user a, 10a decides to purchase the product (television), the user a, 10a can perform product purchase processing at the shop cash register in the shop 20.

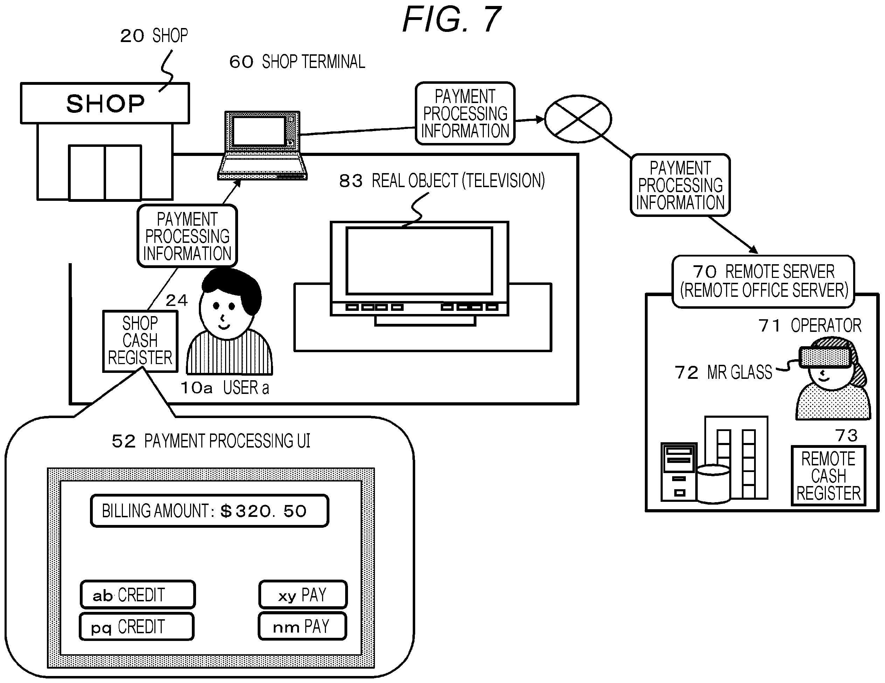

With reference to Fig. 7, a specific example of the product purchase processing by the user will be described.

When deciding to purchase the product (television), the user a, 10a moves to the shop cash register 24 in the shop 20 and performs the product purchase processing.

For example, a payment processing UI 52 as illustrated in Fig. 7 is displayed on the shop cash register 24. The user a, 10a can perform payment processing with use of the UI.

The shop cash register 24 is connected to the remote server 70 via the shop terminal 60. UI operation information of the user a, 10a is input to a remote cash register 73 of the remote server 70, and the payment processing can be confirmed at the remote cash register 73.

The user a, 10a can bring the purchased product home after the payment processing.

As described above, the information processing system of the present disclosure is configured to sequentially execute the following two processing phases, that is,
(1) Phase of observation processing on product (virtual object image), and
(2) Phase of confirmation and purchase processing on real product (real object),
   so that the user can observe various products as a three-dimensional image (virtual object) and can confirm and operate real items, and can purchase a product after obtaining sufficient information regarding the product.

Furthermore, even in a shop with a limited space, it is possible to provide and sell products of various genres, and it is possible to effectively use a narrow space.

Note that, in the above-described embodiment, the configuration example in which the operator 71 is present at the remote server 70 and the operator 71 actually serves customer has been described. However, configuration may be adopted in which a robot that serves a customer, a program that executes processing according to a predetermined algorithm, or an AI processing unit may be used to serve a customer, instead of the operator 71.

### [2. Example of information presented to MR glass worn by user]

Next, an example of information presented to the MR glass worn by the user will be described.

The following embodiments will be sequentially described.
(1) Embodiment of displaying remaining allowable time of confirmation time for real object
(2) Embodiment of displaying virtual object in different color of real object (clothes, etc.) being confirmed by user
(3) Embodiment of displaying try-on example of real object (clothes, etc.) to user

### [2-(1) (Second embodiment) Embodiment of displaying remaining allowable time of confirmation time for real object]

First, as a second embodiment, "(1) Embodiment of displaying remaining allowable time of confirmation time for real object" will be described.

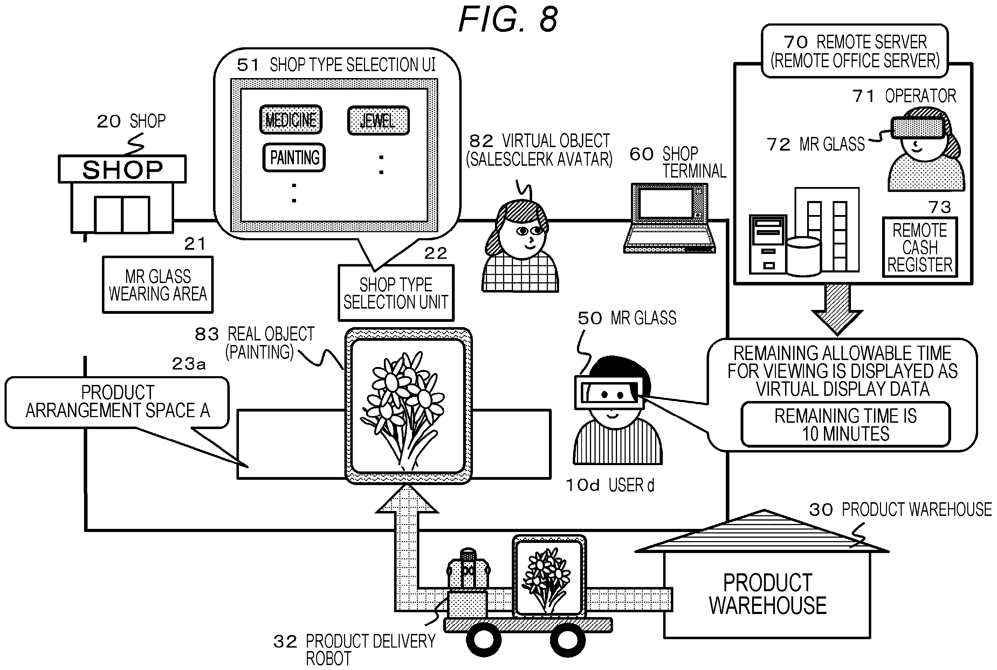

With reference to Fig. 8, a specific example of an embodiment of displaying a remaining allowable time of a confirmation time for a real object will be described.

Fig. 8 illustrates a user d, 10d who has visited the shop 20.

The user d, 10d is a user who desires to purchase a painting.

Similarly to the processing described above with reference to Fig. 6, the user d, 10d observes three-dimensional image data (virtual objects) of various paintings. After this observation processing, the user d, 10d wants to confirm a real item of one painting that attracts interest, and tells the salesclerk avatar (virtual object) 82 who is serving that the user d, 10d wants to confirm the real item of the painting.

Specifically, the user d, 10d talks to the operator 71 of the remote server 70 and tells that the user d, 10d wants to confirm the real item of the painting, via the voice input/output unit (microphone, speaker) of the MR glass 50.

Upon receiving a product confirmation request from the user d, 10d, the operator 71 of the remote server 70 transmits a delivery request for the product designated by the user, from the remote server 70 to the product delivery robot 32 that is waiting in the product warehouse 30.

In response to reception of the product delivery request from the remote server 70, the product delivery robot 32 in the product warehouse 30 takes out the designated product (painting) from the product warehouse 30, and delivers the designated product to the front of the user d, 10d in the shop 20.

By this processing, a real object (painting) 83 illustrated in Fig. 8 is delivered to the front of the user d, 10d in the shop 20.

However, the real object (painting) 83 is expensive, and a viewing time is limited in order to reduce a possibility of theft or breakage.

For example, 20 minutes is set as the viewing time.

In this way, in a case of a product for which the viewing time is set, the remote server 70 displays a remaining allowable time of the viewing time of the product (painting) on the MR glass 50 worn by the user d, 10d.

As illustrated in Fig. 8, for example, the remote server 70 generates a message data such as

"The remaining time is 10 minutes."
and displays such message data on the MR glass 50 worn by the user d, 10d.

This message data is generated by the remote server 70, transmitted to the MR glass 50 via the shop terminal 60, and displayed.

The user d, 10d can know the remaining allowable time of the viewing time of the painting by viewing the message data.

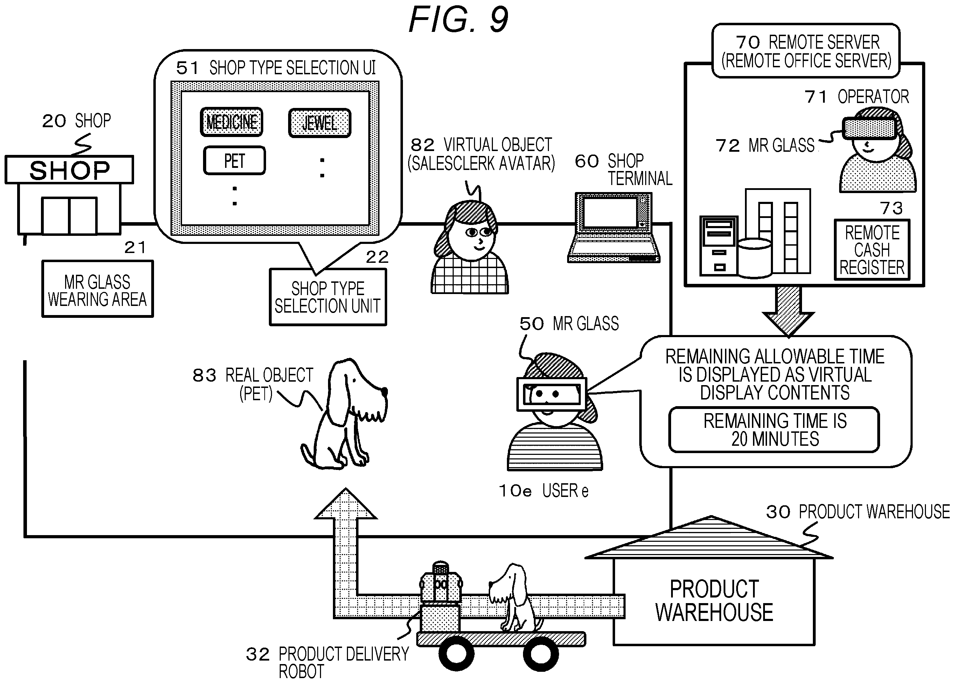

Moreover, with reference to Fig. 9, another specific example of the embodiment of displaying a remaining allowable time of a confirmation time for a real object will be described.

Fig. 9 illustrates a user e, 10e who has visited the shop 20.

The user e, 10e is a user who desires to have an interaction with a pet.

In this case, the shop functions as a shop that provides enjoyment of an interaction with a pet.

The user e, 10e observes three-dimensional image data (virtual object) of various pets similarly to the processing described above with reference to Fig. 6. After this observation processing, the user e, 10e wants to have an interaction with one puppy that attracts interest, and requests the salesclerk avatar (virtual object) 82 who is serving for an interaction with a real puppy.

Specifically, via the voice input/output unit (microphone, speaker) of the MR glass 50, the user e, 10e talks to the operator 71 of the remote server 70 to tell that the user e, 10e wants to have an interaction with the puppy.

Upon receiving the request from the user d, 10d, the operator 71 of the remote server 70 transmits a delivery request for the product (puppy) designated by the user, from the remote server 70 to the product delivery robot 32 that is waiting in the product warehouse 30.

In response to reception of the product delivery request from the remote server 70, the product delivery robot 32 in the product warehouse 30 takes out the designated product (puppy) from the product warehouse 30, and delivers the designated product to the front of the user e, 10e in the shop 20.

By this processing, a real object (puppy) 83 illustrated in Fig. 9 is delivered to the front of the user e, 10e in the shop 20.

However, the real object (puppy) 83 is a living thing, and an interaction time with a limited time is set.

For example, 30 minutes is set as the interaction time.

In this way, in a case of a product for which the interaction time is set, the remote server 70 displays a remaining allowable time of the interaction time of the product (puppy) on the MR glass 50 worn by the user d, 10d.

As illustrated in Fig. 9, for example, the remote server 70 generates a message such as

"The remaining time is 20 minutes."
and displays such message data on the MR glass 50 worn by the user e, 10e.

This message data is generated by the remote server 70, transmitted to the MR glass 50 via the shop terminal 60, and displayed.

The user e, 10e can know the remaining allowable time of the interaction time with the puppy by viewing the message data.

### [2-(2) (Third embodiment) Embodiment of displaying virtual object in different color of real object (clothes, etc.) being confirmed by user]

Next, as a third embodiment, "(2) Embodiment of displaying virtual object in different color of real object (clothes, etc.) being confirmed by user" will be described.

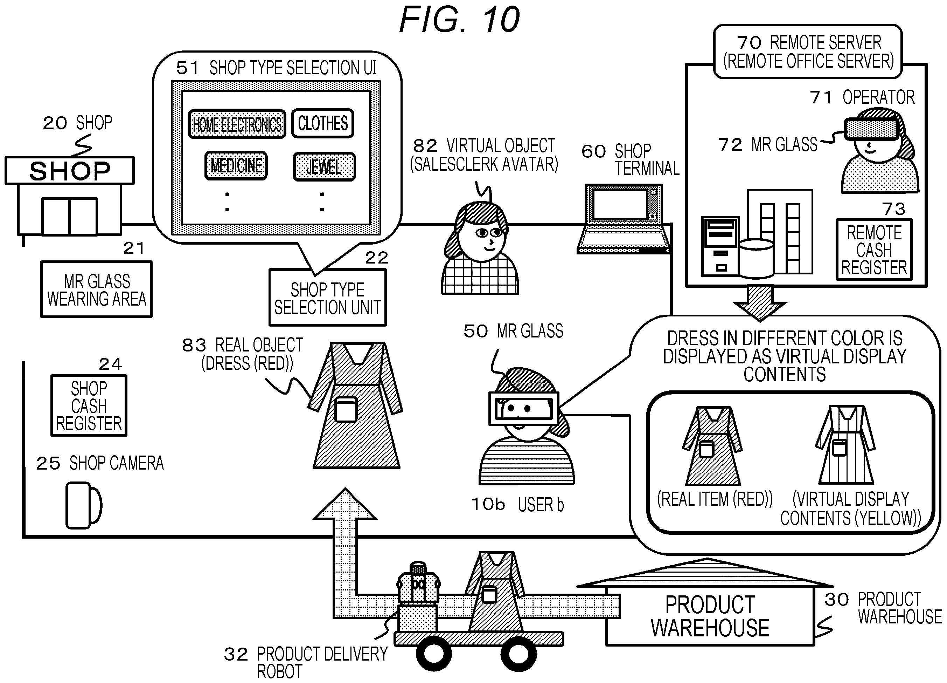

With reference to Fig. 10, a description is given to a specific example of an embodiment displaying a virtual object in a different color of a real object (clothes, etc.) being confirmed by the user.

Fig. 10 illustrates the user b, 10b who has visited the shop 20.

The user b, 10b is the user b, 10b described above with reference to Fig. 3, and is a user who desires to purchase clothes.

The user b, 10b observes three-dimensional image data (virtual object) of various clothes similarly to the processing described above with reference to Fig. 6. After this observation processing, the user b, 10b wants to confirm a real item of one red dress that attracts interest, and tells the salesclerk avatar (virtual object) 82 who is serving that the user b, 10b wants to confirm the real item of the red dress.

Specifically, the user b, 10b talks to the operator 71 of the remote server 70 and tells that the user b, 10b wants to confirm a real item of the red dress, via the voice input/output unit (microphone, speaker) of the MR glass 50.

Upon receiving a product confirmation request from the user b, 10b, the operator 71 of the remote server 70 transmits a delivery request for the product designated by the user, from the remote server 70 to the product delivery robot 32 that is waiting in the product warehouse 30.

In response to reception of the product delivery request from the remote server 70, the product delivery robot 32 in the product warehouse 30 takes out the designated product (red dress) from the product warehouse 30, and delivers the designated product to the front of the user b, 10b in the shop 20.

By this processing, a real object (dress (red)) 83 illustrated in Fig. 10 is delivered to the front of the user b, 10b in the shop 20.

However, after confirming the real object (dress (red)) 83 illustrated in Fig. 10 with a naked eye, the user b, 10b wants to confirm a dress of another color having the same shape, specifically, a yellow dress, and tells the salesclerk avatar (virtual object) 82 who is serving that the user b, 10b wants to confirm the yellow dress.

Specifically, the user b, 10b talks to the operator 71 of the remote server 70 and tells that the user b, 10b wants to confirm the yellow dress, via the voice input/output unit (microphone, speaker) of the MR glass 50.

Upon receiving a product confirmation request for the yellow dress from the user b, 10b, the operator 71 of the remote server 70 generates a three-dimensional image (virtual object) of the yellow dress, and transmits the three-dimensional image (virtual object) to the MR glass 50 worn by the user b, 10b via the shop terminal 60, to display at a position next to the product (red dress) delivered to the user 10.

The user b, 10b can observe the red dress as a real object and the yellow dress as a virtual object side by side.

The processing example described with reference to Fig. 10 is a processing example in which a dress in a different color is displayed so as to be arranged as a virtual object next to a real object.

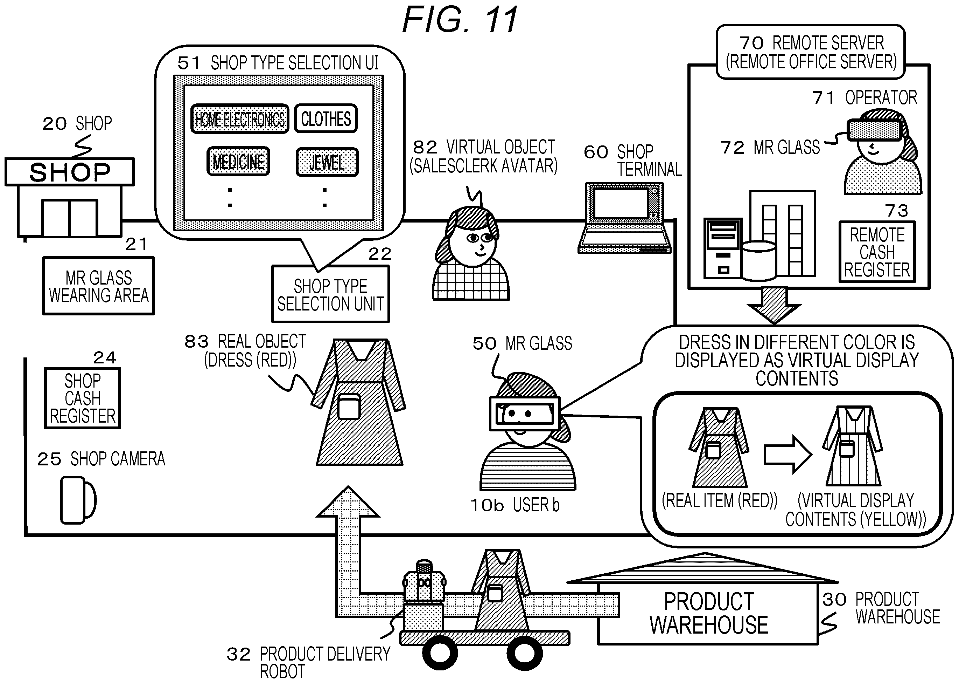

Next, with reference to Fig. 11, a processing example will be described in which a dress in a different color as a virtual object is displayed on a dress for which a real item is being observed by the user b, 10b.

Similarly to the description with reference to Fig. 10, after confirming the real object (dress (red)) 83 illustrated in Fig. 11 with a naked eye, the user b, 10b illustrated in Fig. 11 wants to confirm a dress of another color having the same shape, specifically, a yellow dress, and tells the salesclerk avatar (virtual object) 82 who is serving that the user b, 10b wants to confirm the yellow dress.

Specifically, the user b, 10b talks to the operator 71 of the remote server 70 and tells that the user b, 10b wants to confirm the yellow dress, via the voice input/output unit (microphone, speaker) of the MR glass 50.

Upon receiving a product confirmation request for the yellow dress from the user b, 10b, the operator 71 of the remote server 70 generates a three-dimensional image (virtual object) of the yellow dress, and transmits a yellow dress image as a virtual object to the MR glass 50 worn by the user b, 10b via the shop terminal 60, to display on the real item of the dress being observed by the user b, 10b.

The user b, 10b observes in such a way that the red dress as a real object is changed to the yellow dress.

### [2-(3) (Fourth embodiment) Embodiment of displaying try-on example of real object (clothes, etc.) to user]

Next, as a fourth embodiment, "(3) Embodiment of displaying try-on example of real object (clothes, etc.) to user" will be described.

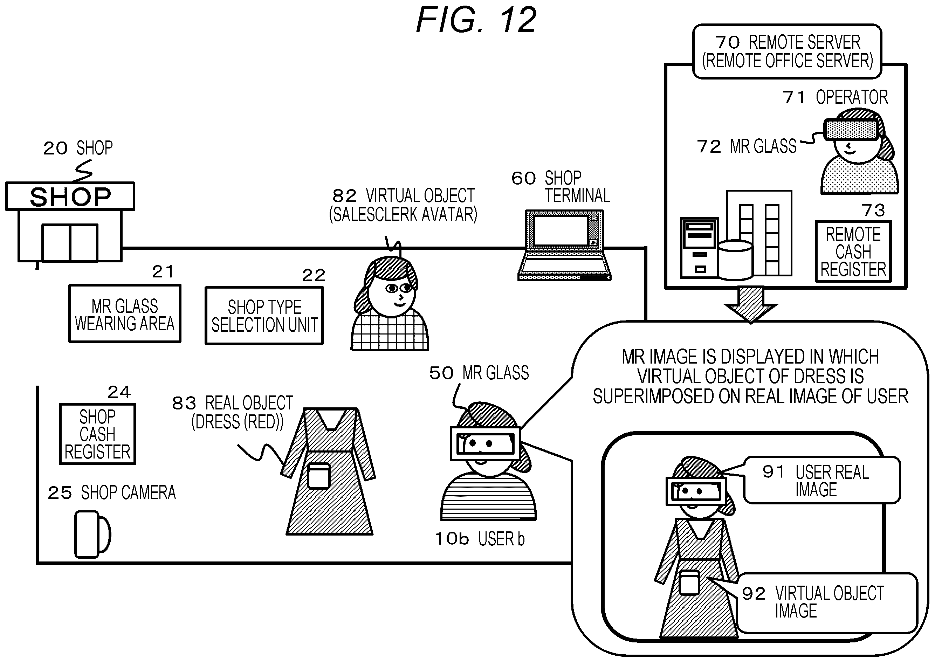

With reference to Fig. 12, a description is given to a specific example of an embodiment of displaying a try-on example of a real object (clothes, etc.) to the user.

Fig. 12 illustrates the user b, 10b who has visited the shop 20.

The user b, 10b is the user b, 10b described above with reference to Fig. 3, and is a user who desires to purchase clothes.

The user b, 10b observes three-dimensional image data (virtual object) of various clothes similarly to the processing described above with reference to Fig. 6. After this observation processing, the user b, 10b wants to confirm a real item of one red dress that attracts interest, and tells the salesclerk avatar (virtual object) 82 who is serving that the user b, 10b wants to confirm the real item of the red dress.

Specifically, the user b, 10b talks to the operator 71 of the remote server 70 and tells that the user b, 10b wants to confirm a real item of the red dress, via the voice input/output unit (microphone, speaker) of the MR glass 50.

Upon receiving a product confirmation request from the user b, 10b, the operator 71 of the remote server 70 transmits a delivery request for the product designated by the user, from the remote server 70 to the product delivery robot 32 that is waiting in the product warehouse 30.

In response to reception of the product delivery request from the remote server 70, the product delivery robot 32 in the product warehouse 30 takes out the designated product (red dress) from the product warehouse 30, and delivers the designated product to the front of the user b, 10b in the shop 20.

By this processing, the real object (dress (red)) 83 illustrated in Fig. 10 is delivered to the front of the user b, 10b in the shop 20.

After confirming the real object (dress (red)) 83 illustrated in Fig. 10 with a naked eye, the user b, 10b wants to objectively confirm a state of a case where the user b, 10b himself/herself tries on the clothes, and tells the salesclerk avatar (virtual object) 82 who is serving that the user b, 10b wants to objectively confirm a try-on state.

Specifically, the user b, 10b talks to the operator 71 of the remote server 70 and tells that the user b, 10b wants to objectively confirm the try-on state, via the voice input/output unit (microphone, speaker) of the MR glass 50.

Upon receiving the request from the user b, 10b, the operator 71 of the remote server 70 generates a try-on image in which a three-dimensional image (virtual object) of the red dress as a virtual object is superimposed on the user b, 10b as the real object, and transmits the try-on image to the MR glass 50 worn by the user b, 10b via the shop terminal 60, to display.

That is, as illustrated in the lower right of Fig. 12, the remote server 70 generates an MR image in which a virtual object image 92 of the dress is superimposed on a user real image 91, and transmits the MR image to the MR glass 50 worn by the user b, 10b, to display.

This image allows the user b, 10b to objectively confirm the try-on state of the red dress.

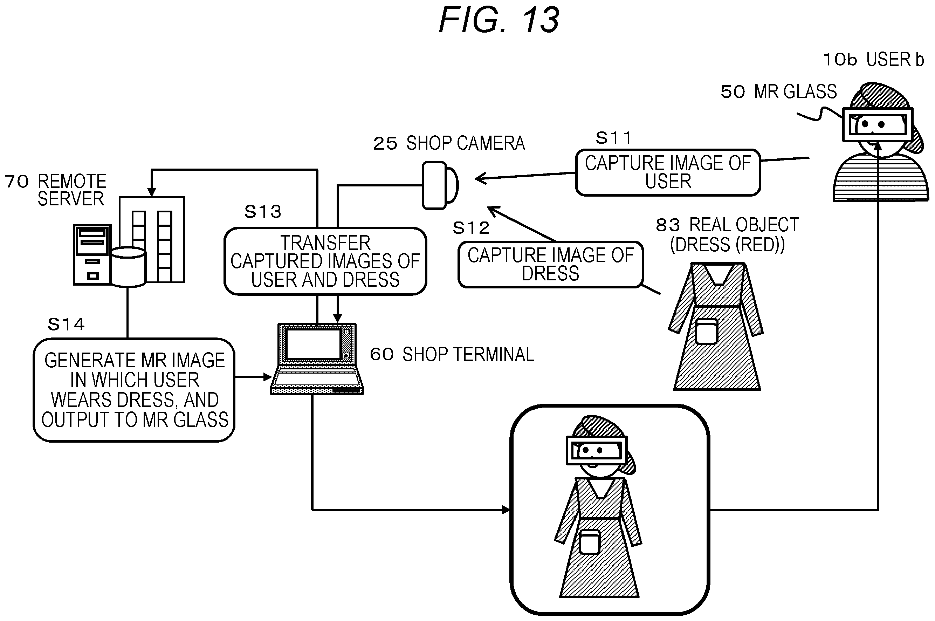

A specific processing sequence example of the try-on image generation processing illustrated in Fig. 12 will be described with reference to Fig. 13.

The processing is executed in the order of steps S11 to S14 illustrated in Fig. 13.

Hereinafter, the processing of each step is described sequentially.

### (Step S11)

First, in step S11, the shop camera 25 captures an image of the user b, 10b in the shop 20.

Note that, although one shop camera 25 is illustrated in the figure, the shop camera 25 is attached to various positions in the shop 20 as described above, and captures an image of the user b, 10b from various directions. That is, user captured-image data from various directions necessary for generating a three-dimensional image of the user b, 10b is acquired.

### (Step S12)

Moreover, in step S12, the shop camera 25 captures an image of a red dress, that is, the real object (dress (red)) 83 in the shop 20.

The image of the real object (dress (red)) 83 is also captured from various directions. That is, captured images from various directions necessary for generating a three-dimensional image of the real object (dress (red)) 83 are acquired.

Note that, in a case where the three-dimensional image data of the real object (dress (red)) 83 has already been stored in the remote server 70, this processing may be omitted.

### (Step S13)

Next, in step S13, the image of the user b, 10b and the image of the real object (dress (red)) 83 captured by the shop camera 25 are transmitted to the remote server 70 via the shop terminal 60.

### (Step S14)

Finally, in step S14, the remote server 70 generates an MR image in which the user wears the dress on the basis of the image of the user b, 10b and the image of the real object (dress (red)) 83 received via the shop terminal 60, and outputs the MR image to the MR glass 50 worn by the user b, 10b via the shop terminal 60, to display.

Through the processing, the user b, 10b can objectively confirm the try-on state of the red dress.

The processing sequence described with reference to Fig. 13 is a processing example in which the remote server 70 executes the generation processing for the MR image in which the user wears the dress. For example, a processing example is also possible in which the shop terminal 60 or the MR glass 50 executes the generation processing for the MR image in which the user wears the dress instead of the remote server 70.

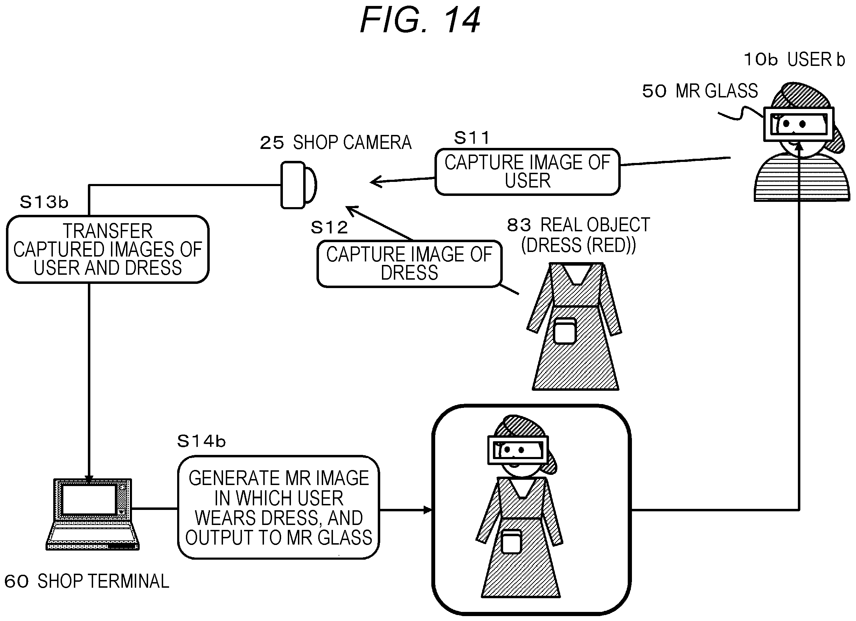

For example, Fig. 14 is a diagram illustrating a processing sequence in which the shop terminal 60 executes the generation processing for the MR image in which the user wears the dress.

In the processing sequence illustrated in Fig. 14, the processing in steps S11 and S12 is a step in which the shop camera 25 captures an image of the user b, 10b and an image of the real object (dress (red)) 83, similarly to the description with reference to Fig. 13.

In step S13b illustrated in Fig. 14, unlike the processing described with reference to Fig. 13, the image of the user b, 10b and the image of the real object (dress (red)) 83 captured by the shop camera 25 are not transmitted to the remote server 70, but are received by the shop terminal 60.

Finally, in step S14b, the shop terminal 60 generates the MR image in which the user wears the dress on the basis of the image of the user b, 10b and the image of the real object (dress (red)) 83, and outputs the MR image to the MR glass 50 worn by the user b, 10b, to display.

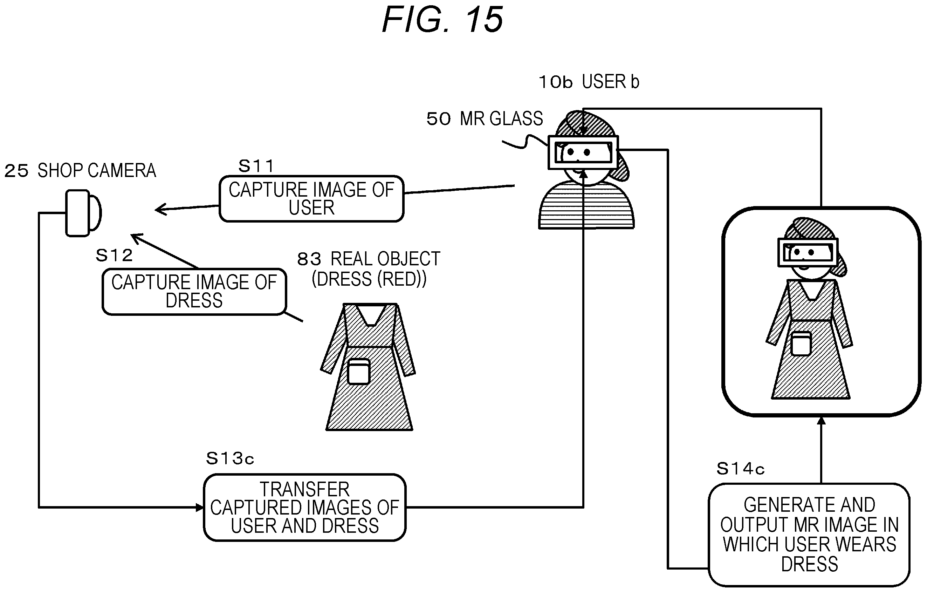

Furthermore, Fig. 15 is a diagram illustrating a processing sequence in which the MR glass 50 execute the generation processing for the MR image in which the user wears the dress.

In the processing sequence illustrated in Fig. 15, the processing in steps S11 and S12 is a step in which the shop camera 25 captures an image of the user b, 10b and an image of the real object (dress (red)) 83, similarly to the description with reference to Fig. 13.

In step S13c illustrated in Fig. 15, unlike the processing described with reference to Fig. 13, the MR glass 50 receives the image of the user b, 10b and the image of the real object (dress (red)) 83 captured by the shop camera 25.

Finally, in step S14c, the MR glass 50 generates the MR image in which the user wears the dress on the basis of the image of the user b, 10b and the image of the real object (dress (red)) 83, and outputs the MR image to the display unit of the MR glass 50 to display.

In this way, the generation processing for the MR image in which the user wears the dress may be executed by the shop terminal 60 or the MR glass 50, without limiting to the remote server 70.

### [3. Other embodiments]

Next, embodiments different from the above-described embodiments are described.

In the above-described embodiment, one remote server 70 performs processing of generating an MR image including three-dimensional image data (virtual object image) of various products such as home electric appliances, clothes, medicines, and the like, and outputting and displaying the MR image on the MR glass 50 worn by the user 10 in the shop 20.

For example, the number of remote servers 70 is not limited to one, and a configuration may be adopted in which a plurality of remote servers is used, such as a remote server operated by a home electric appliance sales company and a server operated by a clothes sales company.

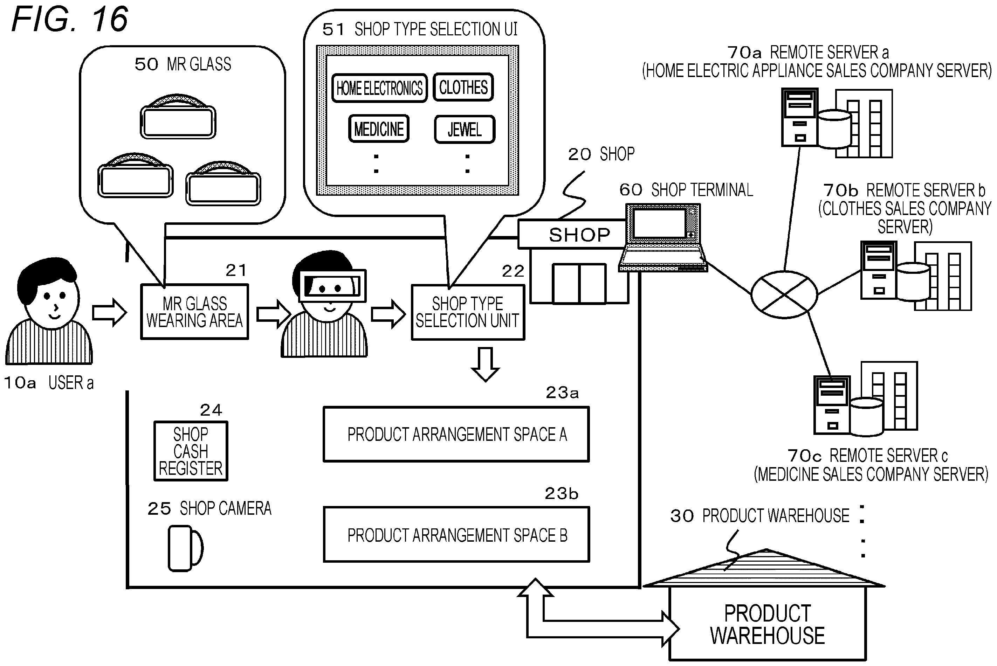

A specific example will be described with reference to Fig. 16.

As illustrated in Fig. 16, the shop terminal 60 of the shop 20 is connected to a plurality of remote servers 70a, 70b, 70c, w .

The remote server a, 70a is a server operated by a home electric appliance sales company.

The remote server b, 70b is a server operated by a clothes sales company.

The remote server c, 70c is a server operated by a medicine sales company.

In addition to this, well-known remote servers that sell various products are communicably connected to the shop terminal 60.

In a case where the user 10 who has entered the shop 20 desires to purchase a home electric appliance, the remote server a, 70a operated by the home electric appliance sales company generates an MR image including three-dimensional image data (virtual objects) of home electric appliances and a salesclerk avatar, and outputs the MR image to the MR glass 50 worn by the user 10 via the shop terminal 60 to display the MR image.

Furthermore, in a case where the user 10 who has entered the shop 20 desires to purchase clothes, the remote server b, 70b operated by the clothes sales company generates an MR image including three-dimensional image data (virtual objects) of clothes and a salesclerk avatar, and outputs the MR image to the MR glass 50 worn by the user 10 via the shop terminal 60 to display the MR image.

In this way, a configuration may be adopted in which the processing is performed by switching the remote server that generates the MR image in accordance with the shop type selected by the user 10 who has entered the shop 20.

Furthermore, without using the remote server 70, the shop terminal 60 may be configured to generate an MR image including three-dimensional image data (virtual objects) of all products and a salesclerk avatar, and output and display the MR image on the MR glass 50 worn by the user 10.

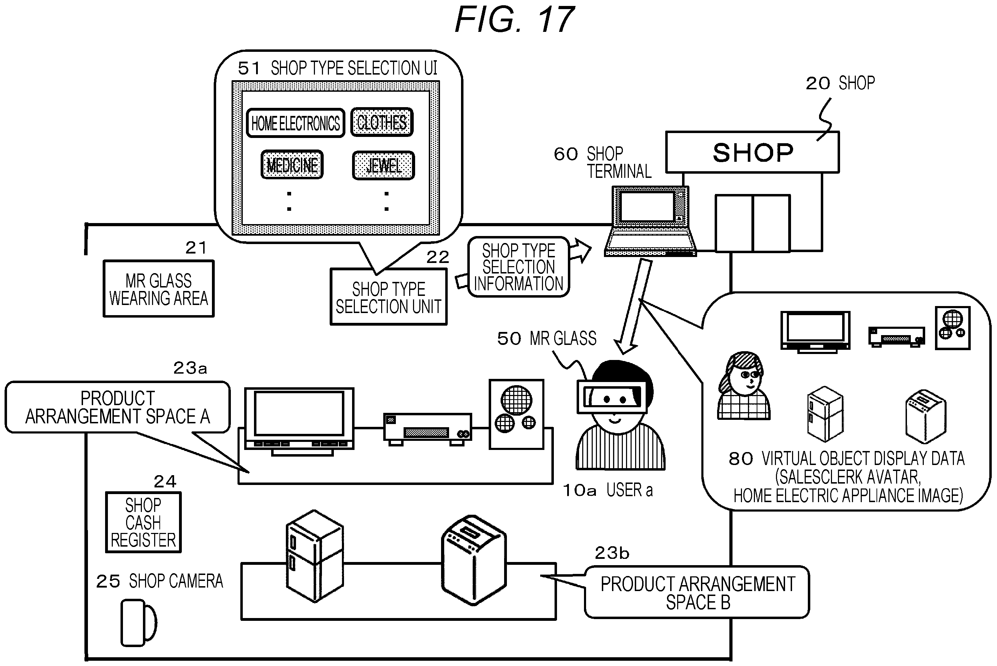

Fig. 17 illustrates a specific example.

The configuration example illustrated in Fig. 17 does not include a remote server.

The shop terminal 60 generates an MR image including three-dimensional image data (virtual objects) of all products and a salesclerk avatar, and outputs the MR image to the MR glass 50 worn by the user 10, to display.

It is also possible to perform processing to which such a configuration is applied.

### [4. Processing example in case where there is plurality of potential purchaser users for different types of products in shop]

Next, a description is given to a processing example in case where there is a plurality of potential purchaser users for different types of products in a shop.

For example, in setting of the embodiment (first embodiment) described with reference to Figs. 1 to 4, there is one remote server 70. For example, in a case where the number of operators 71 at the remote server 60 is small, there is a case where it is necessary to serve a plurality of users in the shop.

Hereinafter, a processing example in such a case will be described.

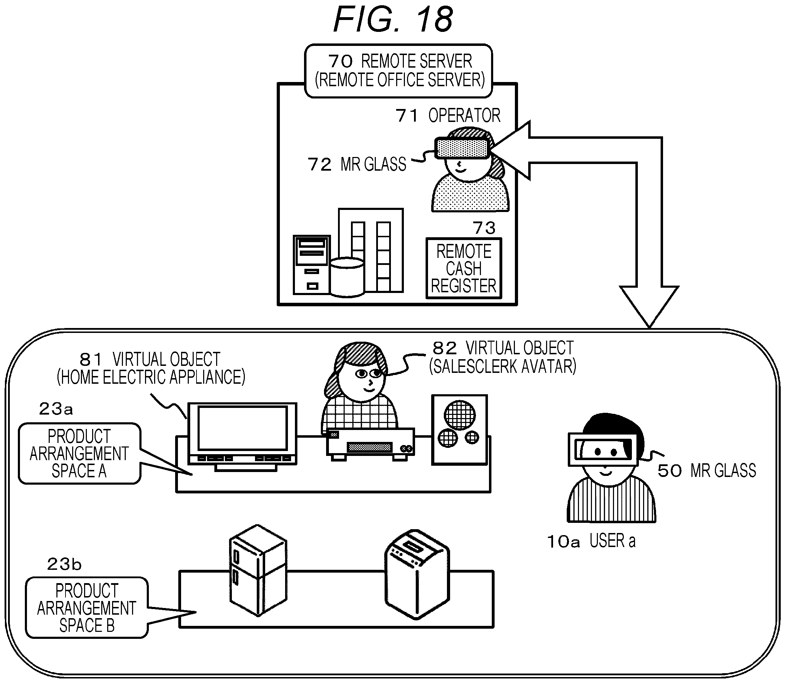

Fig. 18 illustrates an example in which the operator 71 of the remote server 70 is in charge of serving one user in the shop 20, that is, the user a, 10a who desires to purchase a home electric appliance. The diagram on the lower side of Fig. 18 illustrates an example of a display image of the MR glass 72 worn by the operator 71.

A three-dimensional image (virtual object) of a home electric appliance similar to that displayed on the MR glass 50 worn by the user a, 10a who desires to purchase a home electric appliance is displayed on the MR glass 72 worn by the operator 71.

However, for example, a case is assumed here in which the user b who desires to purchase clothes newly visits the shop, and the operator 71 also serves the user b.

In this case, the customer service for the user b who desires to purchase clothes cannot be performed by displaying the MR image in which the three-dimensional image (virtual object) of a home electric appliance is displayed as illustrated in Fig. 18 is displayed on the MR glass 72 worn by the operator 71.

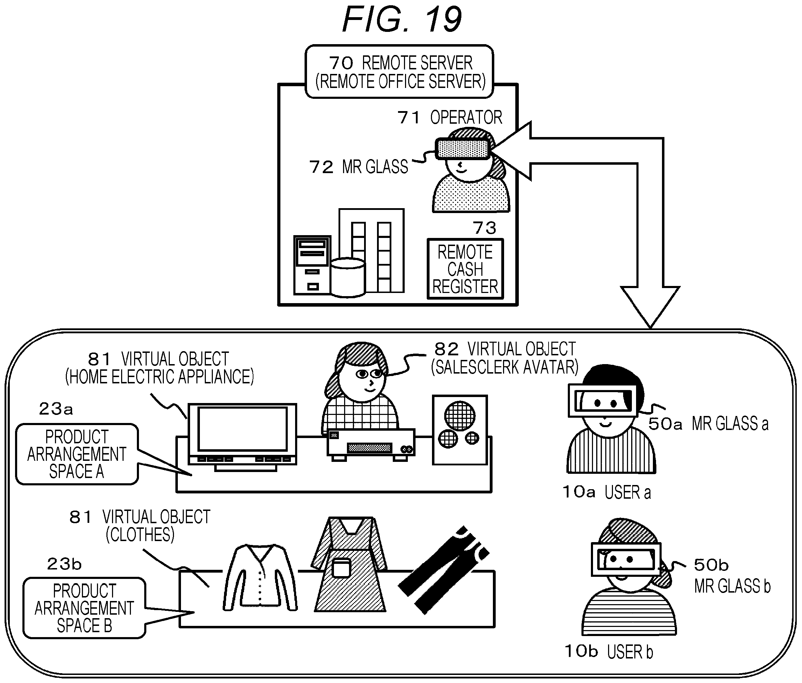

An example of a display image of the MR glass 72 of the operator 71 in such a case will be described with reference to Fig. 19.

Fig. 19 illustrates an example in which the operator 71 of the remote server 70 is in charge of serving two users in the shop 20, that is, the user a, 10a who desires to purchase a home electric appliance and the user b. 10b who desires to purchase clothes.

The diagram on the lower side of Fig. 19 illustrates an example of a display image of the MR glass 72 worn by the operator 71.

As illustrated in Fig. 19, on the MR glass 72 worn by the operator 71, an MR image is generated and output in which a three-dimensional image (virtual object) of a home electric appliance is displayed in a product arrangement space A, 23a near the user a, 10a who desires to purchase a home electric appliance, and an a three-dimensional image (virtual object) of clothes is displayed in a product arrangement space B, 23b near the user b, 10b who desires to purchase clothes.

In this manner, the remote server 70 generates and displays the MR image in which the three-dimensional image (virtual object) of the product desired by the user is output at a position close to each user.

This processing allows the operator 71 of the remote server 70 to serve various potential purchaser users for different types of products.

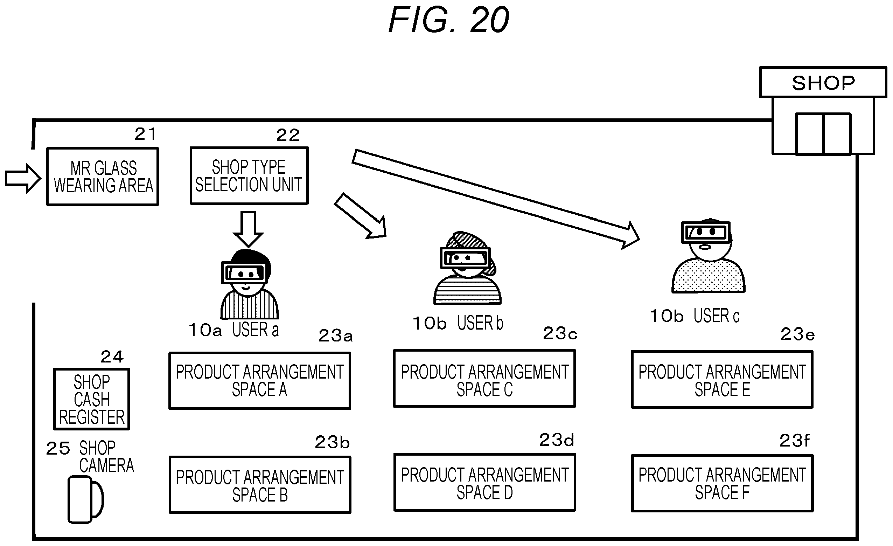

Note that, a configuration may be adopted in which, when potential purchasers for different products visit the shop 20, a three-dimensional image (virtual object) of a product desired to be purchased by each user is output to the MR glass 72 of the operator 71 for every space corresponding to the user, for example, as illustrated in Fig. 20, as setting for guiding the individual user to different user-corresponding spaces in the shop 20.

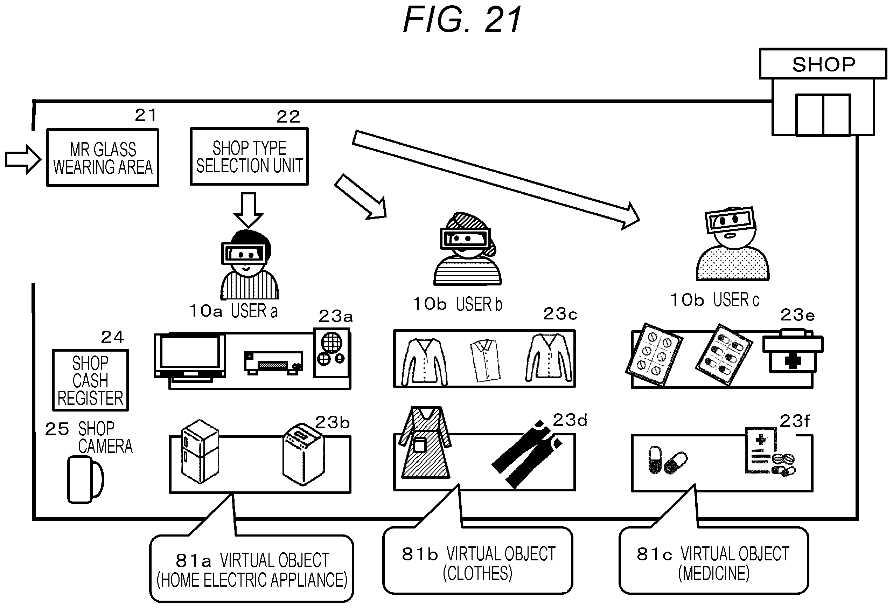

Fig. 21 illustrates a specific example of the MR image output to the MR glass 72 of the operator 71.

Fig. 21 illustrates an example of a case where the following three users visit the shop 20.

User a, 10a = a user who desires to purchase a home electric appliance

User b, 10b = a user who desires to purchase clothes

User c, 10c = a user who desires a medicine

The users a, 10a to c, 10d are individually guided to different spaces in the shop 20.

As illustrated in Fig. 21, the user a, 10a (a user who desires to purchase a home electric appliance) is guided to the left side of the shop 20. The user b, 10b (a user who desires to purchase clothes) is guided to the center of the shop 20. The user c, 10c (a user who desires a medicine) is guided to the right side of the shop 20.

As illustrated in Fig. 21, on the MR glass 72 worn by the operator 71 of the remote server 70, a three-dimensional image (virtual object) of a home electric appliance is displayed in the product arrangement space on the left side of the shop 20 where the user a, 10a (a user who desires to purchase a home electric appliance) is located.

Furthermore, a three-dimensional image (virtual object) of clothes is displayed in the product arrangement space in the central portion of the shop 20 where the user b, 10b (a user who desires to purchase clothes) is located.

Moreover, a three-dimensional image (virtual object) of a medicine is displayed in the product arrangement space on the right side of the shop 20 where the user c, 10c (a user who desires a medicine) is located.

Moreover, in a case where one operator 71 of the remote server 70 serves a plurality of users, for example, three users (the user a, 10a, the user b, 10b, and the user c, 10c) as illustrated in Fig. 21, and the like, the following processing may be performed.

In a case where the operator 71 is serving the user a, 10a, such as, for example, talking with the user a, 10a, a message indicating that the operator 71 is serving a different customer is displayed in the vicinity of a virtual object (salesclerk avatar) displayed in an MR glass worn by other users (the user b, 10b and the user c, 10c). For example, the following message

"Please wait while the salesclerk is serving another customer."
may be displayed.

Furthermore, in this case, setting may be adopted in which voice of the operator 71 who is serving the user a, 10a is output only by a voice output unit of the MR glass worn by the user a, 10a, and voice of the operator 71 is not output to the voice output unit of the MR glass worn by other users (the user b, 10b and the user c, 10c) .

By performing such processing, the operator 71 of the remote server 70 can serve a plurality of potential purchaser users for different types of products.

### [5. Sequence of processing executed by information processing system of present disclosure]

Next, a sequence of processing executed by the information processing system of the present disclosure will be described.

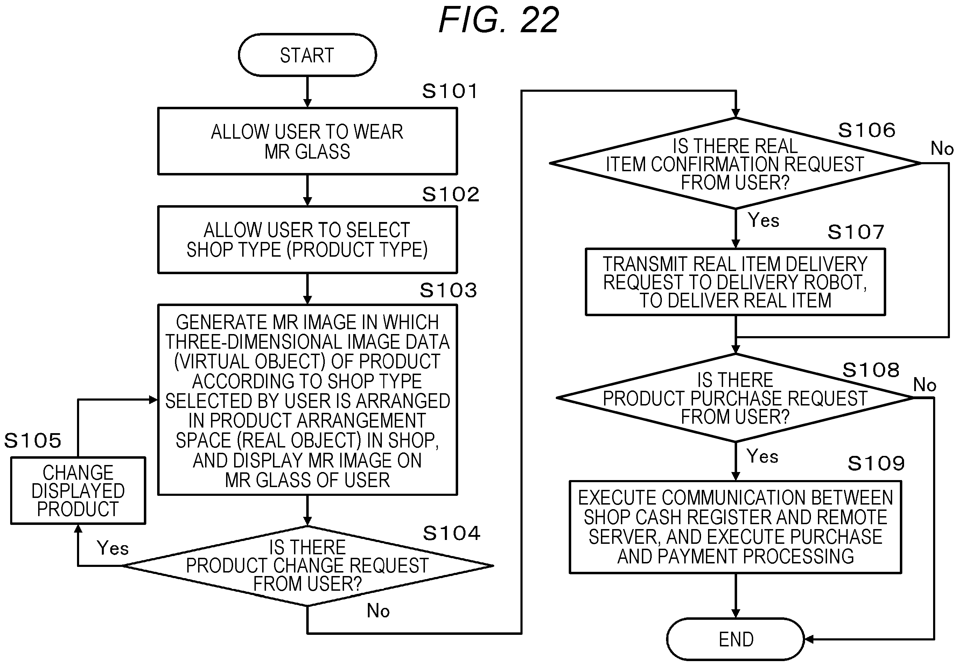

A sequence of processing executed by the information processing system of the present disclosure will be described with reference to Fig. 22.

Hereinafter, processing of each step in the flowchart illustrated in Fig. 22 will be described.

### (Step S101)

First, in step S101, a user who has entered the shop wears the MR glass.

This processing is, for example, processing performed in the MR glass wearing area 21 in the shop 20 illustrated in each of Fig. 1 and other figures.

### (Step S102)

Next, in step S102, the user who has entered the shop selects a shop type.

That is, the user selects a type of shop that provides a product that the user wants to purchase or wants to see, for example, home electronics, clothes, medicine, or the like.

This processing is, for example, processing performed by the shop type selection unit 22 in the shop 20 illustrated in each of Fig. 1 and other figures.

As described above with reference to Fig. 1, the user 10 uses the shop type selection UI 51 illustrated in Fig. 1, for example, to select the type of shop that provides the product the user 10 desires to purchase.

For example, in a case where the user 10 wants to purchase a home electric appliance such as a television or a refrigerator, the user 10 selects "home electronics". Furthermore, in a case where the user 10 wants to purchase clothes, the user 10 selects "clothes".

### (Step S103)

Next, in step S103, an MR image in which a virtual object such as three-dimensional image data of a product according to the shop information selected by the user 10 in step S102 is arranged in a product arrangement space (real object) of the shop is generated and displayed on the MR glass 50 worn by the user 10.

Note that, in this flow, the description will be given on the assumption that the generation processing for the virtual object such as three-dimensional image data of a product and the generation processing for the MR image are executed by the remote server 70. However, as described above, the generation processing for the virtual object such as three-dimensional image data of a product or the generation processing for the MR image may be executed by the shop terminal 60 or the MR glass 50, for example, without limiting to the remote server 70.

As described above with reference to Fig. 1 and the like, the remote server 70 determines a product (virtual object) to be displayed in the product arrangement space 23 in accordance with the shop information selected by the user 10, generates three-dimensional image data of the determined product (virtual object), and outputs the three-dimensional image data to the MR glass 50 worn by the user 10 via the shop terminal 60, to display.

Note that, although description is omitted in this flow, as described above with reference to Fig. 1 and the like, a three-dimensional image (virtual object image) of the product similar to that output onto the MR glass 50 worn by the user 10 is also displayed on the MR glass 72 worn by the operator 71 of the remote server 70.

As described above with reference to Fig. 2 and the like, the remote server 70 further generates a salesclerk avatar which is three-dimensional virtual image data of a salesclerk who serves the user 10, and outputs the salesclerk avatar to the MR glass 50 worn by the user via the shop terminal 60, to display.

For example, this corresponds to the virtual object (salesclerk avatar) 82 illustrated in Fig. 2.

As illustrated in Fig. 2, the remote server 70 generates virtual object display data (salesclerk avatar, home electric appliance image) 80, and outputs the virtual object display data (salesclerk avatar, home electric appliance image) 80 to the MR glass 50 worn by the user 10 via the shop terminal 60, to display.

The virtual object (home electric appliance) 81 and the virtual object (salesclerk avatar) 82 illustrated in Fig. 2 are not real objects existing in the shop 20, but are virtual objects output and displayed on the MR glass 50 worn by the user 10.

### (Step S104)

Next, step S104 is processing of determining whether or not there is a product change request from the user.

As described above with reference to Fig. 2 and the like, the MR glass 50 worn by the user 10 and the MR glass 72 worn by the operator 71 of the remote server 70 are provided with the voice input/output unit (microphone, speaker).

The virtual object (salesclerk avatar) 82 output on the MR glass 50 worn by the user 10 is a salesclerk avatar corresponding to the operator 71 of the remote server 70. The user 10 can have a conversation with the operator 71 of the remote server 70 as if having a conversation with the virtual object (salesclerk avatar) 82 output on the MR glass 50.

For example, in a case where the user 10 requests product explanation from the salesclerk avatar 82, the operator 71 of the remote server 70 can perform the product explanation, and the user 10 can receive the product explanation from the operator 71 with a feeling similar to that of receiving the explanation from the salesclerk existing in the shop.

The determination processing in step S104 is, for example, processing in which the operator 71 of the remote server 70 determines whether or not the user 10 has had a conversation with the salesclerk avatar 82 (= the operator 71 of the remote server 70) and has requested a change of the product.

Note that, in this flow, a description is given to a processing example in which the operator 71 of the remote server 70 performs this determination processing. However, as described above, a configuration may be adopted in which a robot or a program for executing processing according to a predetermined algorithm or an AI processing unit performs customer service, instead of the operator 71. In that case, the determination processing in step S104 is executed by the robot, the program for executing processing according to the predetermined algorithm, or the AI processing unit.

In a case where a result of the determination processing in step S104 is Yes, that is, in a case where there is a product change request from the user, the processing proceeds to step S105. Whereas, in a case where there is no product change request from the user, the processing proceeds to step S106.

### (Step S105)

The processing of step S105 is executed in a case where a result of the determination processing in step S104 is Yes, that is, in a case where there is a product change request from the user.

In this case, in steps S105 to S103, processing of changing the product (virtual object) displayed on the MR glass 50 of the user 10 is performed.

Specifically, the remote server 70 determines a new product (virtual object) to be displayed in the product arrangement space 23 of the shop 20, generates three-dimensional image data of the determined new product (virtual object), and outputs the three-dimensional image data to the MR glass 50 worn by the user 10 via the shop terminal 60, to display.

### (Step S106)

In a case where No is determined in the determination processing in step S104, that is, in a case where there is no product change request from the user, the processing proceeds to step S106.

In this case, in step S106, it is determined whether or not there is a confirmation request for a real product item from the user 10.

Specifically, for example, the operator 71 of the remote server 70 determines whether or not the user 10 has had a conversation with the salesclerk avatar 82 (= the operator 71 of the remote server 70) and has requested confirmation of a real item of the product.

In a case where there is a confirmation request for the real product item from the user 10, the processing proceeds to step S107. If not, the processing proceeds to step S108.

### (Step S107)

The processing of step S107 is executed in a case where there is a confirmation request for the real product item from the user 10 in step S106.

In this case, in step S107, the remote server 70 transmits a delivery request for causing the delivery robot 32 to execute processing of taking out the product requested by the user 10 from the product warehouse 30 and carrying the product to the front of the user 10 in the shop 20, to deliver the real item of the product to the front of the user 10.

This processing corresponds to the processing described above with reference to Fig. 6, for example.

Upon receiving a product confirmation request from the user 10, the operator 71 of the remote server 70 transmits a delivery request for the product designated by the user, from the remote server 70 to the product delivery robot 32 that is waiting in the product warehouse 30.

In response to reception of the product delivery request from the remote server 70, the product delivery robot 32 in the product warehouse 30 takes out the designated product (for example, a television) from the product warehouse 30, and delivers the designated product to the front of the user 10 in the shop 20.

By this processing, for example, as illustrated in Fig. 6, the real object (television) 83 is delivered to the front of the user 10 in the shop 20.

### (Step S108)

Next, in step S108, it is determined whether or not there is a product purchase request from the user 10.

Specifically, for example, the operator 71 of the remote server 70 determines whether or not the user 10 has had a conversation with the salesclerk avatar 82 (= the operator 71 of the remote server 70) and has given an intention indication to purchase the product.

In a case where it is determined that there is an intention indication to purchase the product from the user 10, the processing proceeds to step S109. In a case where there is no intention indication to purchase the product from the user 10, the processing ends.

Note that, even in a case where there is no intention indication to purchase the product from the user 10, for example, in a case where there is a product change request from the user, the processing from step S105 to step S103 and subsequent steps is executed again. Furthermore, in a case where there is a confirmation request for the real product from the user 10, step S107 is executed.

### (Step S109)

In step S108, in a case where it is determined that there is an intention indication to purchase the product from the user 10, the processing proceeds to step S109, and communication between the shop cash register 24 and the remote server 70 is executed to execute product purchase and payment processing.

This processing corresponds to the processing described above with reference to Fig. 7.

As described with reference to Fig. 7, when deciding to purchase a product (for example, a television), the user 10 moves to the shop cash register 24 in the shop 20 and performs the product purchase processing.

For example, the payment processing UI 52 as illustrated in Fig. 7 is displayed on the shop cash register 24. The user 10 can perform payment processing with use of the UI.

The shop cash register 24 is connected to the remote server 70 via the shop terminal 60. UI operation information of the user 10 is input to the remote cash register 73 of the remote server 70, and the payment processing can be confirmed at the remote cash register 73.

The user 10 can bring the purchased product home after the payment processing.

With the above processing, the processing ends.

Note that, in the flow illustrated in Fig. 22, the description has been given on the assumption that the user who has come to the shop 20 performs the processing of selecting the shop type in step S102.

However, without performing such processing, for example, the shop type or the product type to be presented to the user may be automatically determined on the basis of registration information of a database managed by the remote server 70 or the shop 20.

For example, preference information of a registered user, for example, a member user is registered in advance in a database managed by the remote server 70 or the shop 20.

It is possible to perform processing of estimating a product matching the user preference for every user who has visited the shop on the basis of the user preference information registered in the database, and determining a product (virtual object) to be output to the MR glass of the user on the basis of the estimation result.

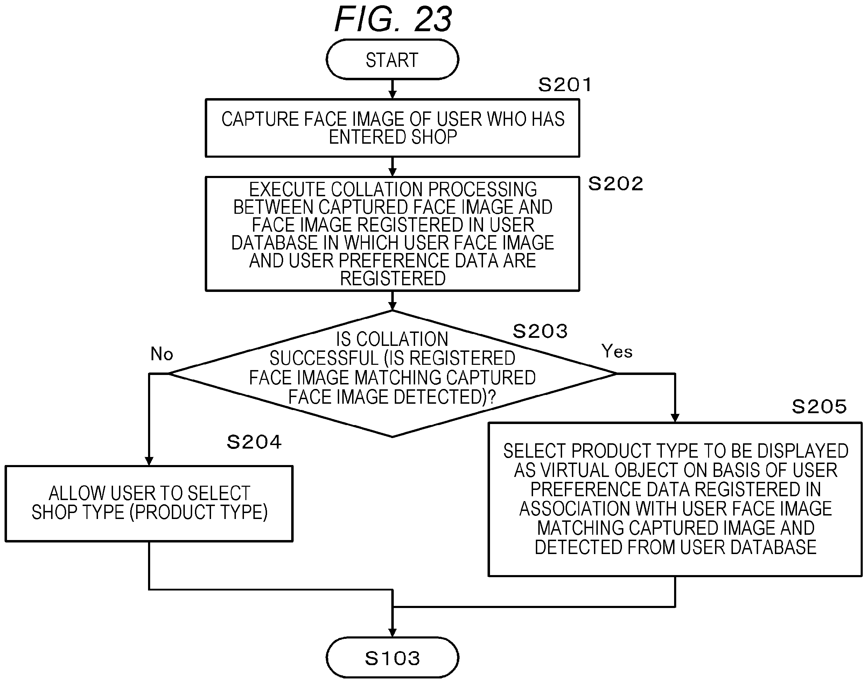

When this processing is performed, the processing in step S102 of the flow illustrated in Fig. 22 is replaced with the processing in steps S201 to S205 of the flow illustrated in Fig. 23 to be executed.

Processing in steps S201 to S205 of the flow illustrated in Fig. 23 will be described.

### (Step S201)

First, in step S201, a face image of the user who has entered the shop is captured.

For example, the face image of the user who has entered the shop is captured using the shop camera 25 provided in the shop 20.

### (Step S202)

Next, in step S202, collation processing is executed between the face image of the user entering the shop captured in step S201 and face images registered in the database.

In the database, preference information of each user is registered in association with the face image of the user. Note that the user preference information registered in the database includes, for example, information based on purchase history information of the user, search history information by the user, or the like, in addition to information given by the user himself/herself.

### (Step S203)

Next, in step S203, it is determined whether or not the collation processing in step S202 is successful, that is, whether or not a registered face image matching the face image of the user entering the shop captured in step S201 has been detected from the database.

In a case where a registered face image is not detected, the processing proceeds to step S204.

Whereas, in a case where a registered face image is detected, the processing proceeds to step S205.

### (Step S204)

In a case where the collation processing fails in step S203, that is, in a case where a registered face image matching the face image of the user entering the shop captured in step S201 is not detected from the database, the processing of step S204 is executed.

In this case, in step S204, the user who has entered the shop selects a shop type.

This processing is the same as the processing of step S102 of the flow of Fig. 22 described above.

That is, the user himself/herself selects a type of shop that provides a product that the user wants to purchase or wants to see, for example, home electronics, clothes, medicine, or the like.

For example, in the shop type selection unit 22 in the shop 20 illustrated in Fig. 1, the shop type selection UI 51 is used to select the type of shop that provides the product the user 10 desires to purchase.

After this processing, the processing proceeds to step S103 of the flow illustrated in Fig. 22.

### (Step S205)

Whereas, in a case where the collation processing is successful in step S203, that is, in a case where a registered face image matching the face image of the user entering the shop captured in step S201 is detected from the database, the processing of step S205 is executed.

In this case, in step S205, a shop type (product type) to be presented to the user is determined on the basis of the user preference data registered in association with the user face image matching the captured image and detected from the user database. That is, the product type to be displayed as a virtual object is determined.

After this processing, the processing proceeds to step S103 of the flow illustrated in Fig. 22.

In this way, a configuration may be adopted in which the processing of automatically determining the shop type or the product type to be presented to the user is performed on the basis of the registration information of the database managed by the remote server 70 or the shop 20, without the user performing the processing of selecting the shop type.

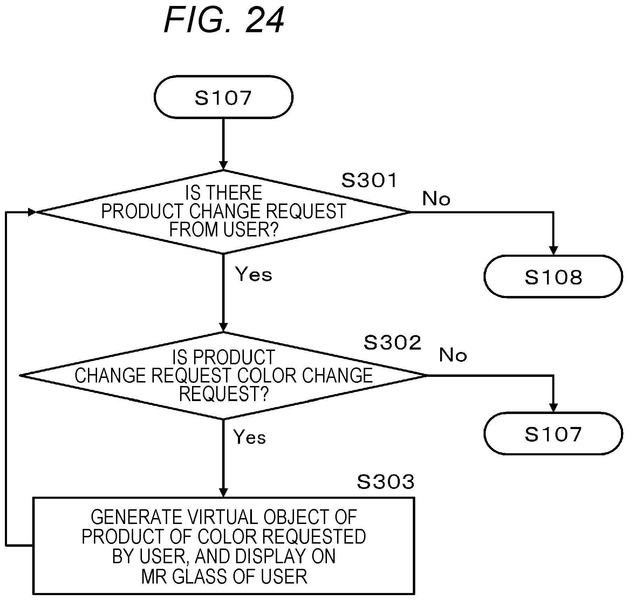

Next, with reference to the flow illustrated in Fig. 24, a description is given to a processing sequence in a case where the delivery robot 32 delivers a real item of a product to the front of the user 10 and then the user makes a request to see a product in a different color in step S107 of the flow illustrated in Fig. 22.

The flow illustrated in Fig. 24 is a processing flow in a case where the processing described above with reference to Figs. 10 and 11 is performed.

The flow illustrated in Fig. 24 is executed after the processing in step S107 of the flow illustrated in Fig. 22. The processing of each step of the flowchart illustrated in Fig. 24 will be sequentially described.

### (Step S301)

In step S107 of the flow illustrated in Fig. 22, after the delivery robot 32 delivers a real item of a product to the front of the user 10, the processing of step S301 is executed.

In step S301, it is determined whether or not there is a product change request from the user 10.

Specifically, for example, the operator 71 of the remote server 70 determines whether or not the user 10 has had a conversation with the salesclerk avatar 82 (= the operator 71 of the remote server 70) and has requested a change of the product.

In a case where there is a product change request from the user 10, the processing proceeds to step S302. If not, the processing proceeds to step S108 of the flow illustrated in Fig. 22.

### (Step S302)

In a case where there is a product change request from the user 10 in step S301, it is determined in step S302 whether or not the product change request from the user 10 is for a color change of the product.

Specifically, for example, the operator 71 of the remote server 70 determines whether or not the user 10 has had a conversation with the salesclerk avatar 82 (= the operator 71 of the remote server 70) and has requested a color change of the product.

In a case where there is a product color change request from the user 10, the processing proceeds to step S303. In a case where the product change request from the user 10 is a change request that is not for a product color change, the processing proceeds to step S107 of the flow illustrated in Fig. 22, and delivery processing for a new product according to the user request is performed.

### (Step S303)

In a case where it is determined in step S302 that the product change request from the user 10 is for a product color change, the processing of step S303 is executed.

In this case, the remote server 70 generates three-dimensional image data (virtual object) in which the color of the product is changed as described above with reference to Figs. 10 and 11, and displays the three-dimensional image data on the MR glass 50 of the user 10.

For example, in a case of performing the processing described with reference to Fig. 10, when the operator 71 of the remote server 70 receives a product change request from the user 10 for a color (for example, a yellow dress) different from a color (for example, a red dress) of a product delivered to the user 10, the operator 71 generates a three-dimensional image (virtual object) of the product of the color (for example, yellow) the user desires, and transmits the three-dimensional image (virtual object) to the MR glass 50 worn by the user 10 via the shop terminal 60, to display at a position next to the product (for example, a red dress) delivered to the user 10.

The user 10 can observe the real object (for example, a red dress) and the virtual object (for example, a yellow dress) side by side.

Furthermore, in a case of executing the processing described with reference to Fig. 11, when the operator 71 of the remote server 70 receives a product change request from the user 10 for a color (for example, a yellow dress) different from a color (for example, a red dress) of a product delivered to the user 10, the operator 71 generates a three-dimensional image (virtual object) of the product of the color (for example, yellow) the user desires, and transmits the three-dimensional image (virtual object) to the MR glass 50 worn by the user 10 via the shop terminal 60, to display as a virtual object (for example, a three-dimensional image of a yellow dress) on the product (for example, a red dress) delivered to the user 10.

The user 10 observes in such a way that the red dress as a real object is changed to the yellow dress.

By using the virtual object (three-dimensional image) of the product in this manner, it is possible to immediately respond to the product change requested by the user.

### [6. Configuration example of information processing device constituting information processing system of present disclosure]

Next, a configuration example of an information processing device constituting the information processing system of the present disclosure will be described.

Hereinafter, configuration examples of the information processing device in the following two system configuration examples will be described.
(a) Configuration example in which remote server performs generation processing for MR image including virtual object
(b) Configuration example in which shop terminal performs generation processing for MR image including virtual object

### ((6-(a) Configuration example in which remote server performs generation processing for MR image including virtual object)

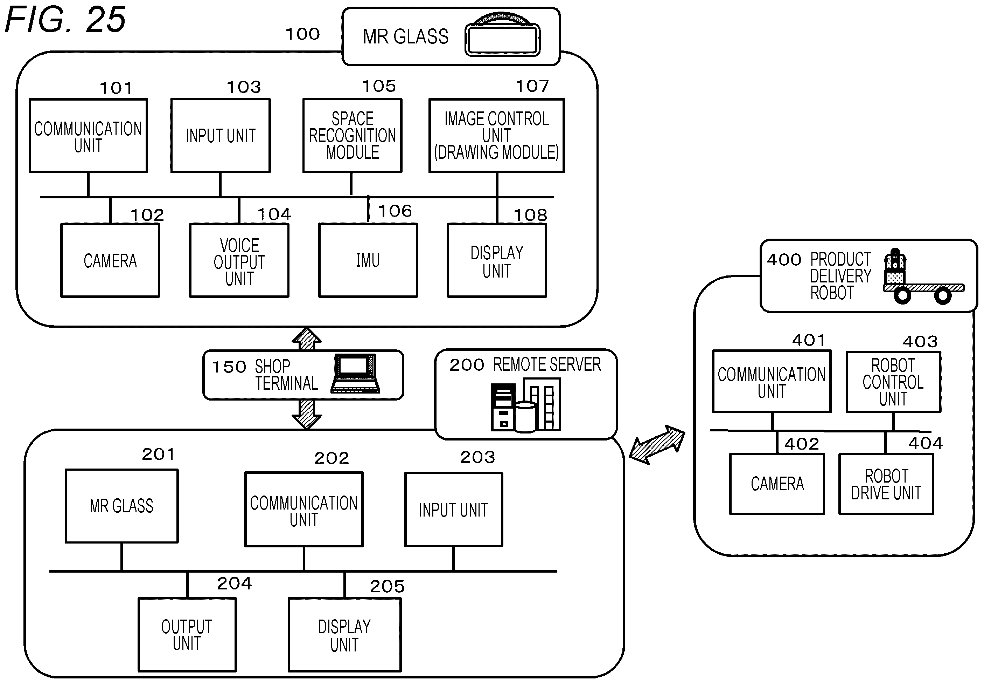

First, with reference to Fig. 25, "(a) Configuration example in which remote server performs generation processing for MR image including virtual object" will be described.

Fig. 25 illustrates configuration examples of an MR glass 100 which is information processing devices constituting the information processing system of the present disclosure, a remote server 200, and a product delivery robot 400.

Note that, in the configuration example illustrated in Fig. 25, a shop terminal 150 is illustrated as a relay device of communication between the MR glass 100 and the remote server 200.

Furthermore, the shop terminal 150 executes communication with the shop camera 25, the shop cash register 24, and the shop information selection unit 22 in the shop 20 described with reference to Fig. 1 and the like, for example, and transmits images and information acquired from these individual devices to the remote server 200.

As illustrated in the figure, the MR glass 100 include a communication unit 101, a camera 102, an input unit 103, a voice output unit 104, a space recognition module 105, an IMU 106, an image control unit (drawing module) 107, and a display unit 108.

The communication unit 101 is used for communication with the shop terminal 150 and communication with the remote server 200 via the shop terminal 150.

The camera 102 captures an image in a line-of-sight direction of a user wearing the MR glass 100. This image is used, for example, for analysis processing of the line-of-sight direction of the user.

The input unit 103 includes an operation unit, a voice input unit (microphone), and the like to be used by the user.

The voice output unit 104 is used for, for example, processing of outputting voice of an operator of the remote server 200.

Furthermore, in addition to the operator of the remote server 200, the voice output unit 104 is also used for outputting guidance information from the remote server 200 or the shop terminal 150.

The space recognition module 105 performs, for example, analysis processing on an image captured by the camera 102 and a captured image obtained by the shop camera input via the shop terminal 150, and analyzes three-dimensional environment information around the user wearing the MR glass 100. For example, three-dimensional information of surrounding objects is analyzed, such as a position and a size of a product arrangement space.

The IMU 106 is an inertial measurement unit, and is a motion sensor capable of simultaneously measuring acceleration in xyz three-axis directions, angular velocity around the xyz three axes, and the like.

A detection value for analyzing a motion of the MR glass 100 is acquired.

The detection value of the IMU 196 is used for analyzing a motion of the MR glass 100 together with, for example, a captured image obtained by the camera 102, and a direction, a size, and the like of a three-dimensional image (virtual object) displayed on the display unit 108 of the MR glass 100 are sequentially updated on the basis of the motion analysis information.

Note that, in a case where the remote server 200 generates a three-dimensional image (virtual object) to be displayed on the display unit 108 of the MR glass 100, both the detection value of the IMU 196 and the captured image obtained by the camera 102 are transmitted to the remote server 200, and the remote server 200 sequentially updates a direction, a size, and the like of the three-dimensional image data (virtual object) transmitted to the MR glass 100 on the basis of these pieces of information.

The image control unit (drawing module) 107 executes drawing processing of a three-dimensional image (virtual object) displayed on the display unit 108 of the MR glass 100.

The display unit 108 displays a three-dimensional image (virtual object).

Note that, as described above, as the MR glass 100, there are a transmissive MR glass having a transmissive display unit and a non-transmissive MR glass having a non-transmissive display unit. In a case of the transmissive MR glass, a real object can be directly observed through the transmissive display unit. In a case of the non-transmissive MR glass, a captured image obtained by the camera 102 is displayed for a real object.

Next, a configuration of the remote server 200 will be described.

As illustrated in the figure, the remote server 200 includes an MR glass 201 worn by the operator at the remote server, a communication unit 202, an input unit 203, an output unit 204, and a display unit 205.

The MR glass 201 is an MR glass worn by the operator at the remote server, and has a configuration similar to the above-described MR glass 100.

However, the MR glass 201 worn by the operator at the remote server is non-transmissive MR glass, and displays a three-dimensional image (virtual object) of a product on a captured image obtained by the shop camera or the camera 102 of the MR glass 100 worn by the user, or on an image generated on the basis of the captured image.

The communication unit 202 is used for communication with the shop terminal 150 and communication with the MR glass 100 via the shop terminal 150. Moreover, the communication unit 202 is also used for communication with the product delivery robot 400.

Furthermore, communication with a shop camera, a shop cash register, and a shop information selection unit is executed via the shop terminal 150.

The input unit 203 is used for input of operation information of the operator on the remote server 200 side, and the like.

The output unit 204 is used to output information to the operator on the remote server 200 side. For example, the output unit 204 includes a warning lamp, a speaker, and the like.

The display unit 205 is used to present information to the operator on the remote server side. For example, the display unit 205 includes a display.

Next, a configuration of the product delivery robot 400 will be described.

As illustrated in the figure, the product delivery robot 400 includes a communication unit 401, a camera 402, a robot control unit 403, and a drive unit 404.

The communication unit 401 is used for communication with the remote server 200. For example, the communication unit 401 is used for communication such as a product delivery instruction.

The camera 402 is used for processing such as confirmation of a travel route of the product delivery robot 400 and confirmation of a delivery product.

The robot control unit 403 controls the drive unit 404 to perform control for causing the robot to travel to a destination.

The drive unit 404 includes an electric circuit for traveling of the robot, traveling tires, and the like, and is used to cause the robot to travel.

### (6-(b) Configuration example in which shop terminal performs generation processing for MR image including virtual object)

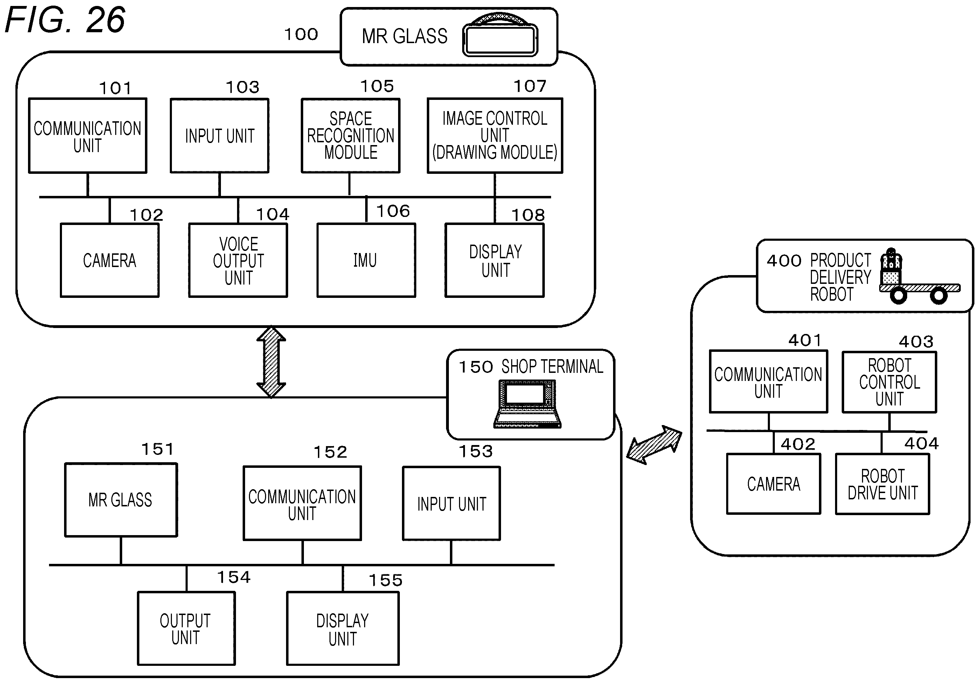

Next, with reference to Fig. 26, "(b) Configuration example in which shop terminal performs generation processing for MR image including virtual object" will be described.

Fig. 26 illustrates configuration examples of the MR glass 100 which is information processing devices constituting the information processing system of the present disclosure, the shop terminal 150, and the product delivery robot 400.

In the configuration example illustrated in Fig. 26, the remote server 20 is not provided.

In the configuration example illustrated in Fig. 26, all the processing executed by the remote server described in the above-described embodiment is executed by the shop terminal 150.

The MR glass 100 illustrated in Fig. 26 has a configuration similar to the MR glass 100 described above with reference to Fig. 25.

The shop terminal 150 illustrated in Fig. 26 includes an MR glass 151 worn by an operator, a communication unit 152, an input unit 153, an output unit 154, and a display unit 155. This configuration is substantially similar to the configuration of the remote server 200 described with reference to Fig. 25.

In this example, the MR glass 151 is worn by an operator who operates the shop terminal 150.

The shop terminal 150 illustrated in Fig. 26 executes communication with a shop camera, a shop cash register, and a shop information selection unit via the communication unit 152.

Moreover, the shop terminal 150 executes communication with the product delivery robot 400 via the communication unit 152, and makes a product delivery request to the product delivery robot 400.

### [7. Hardware configuration example of information processing device]

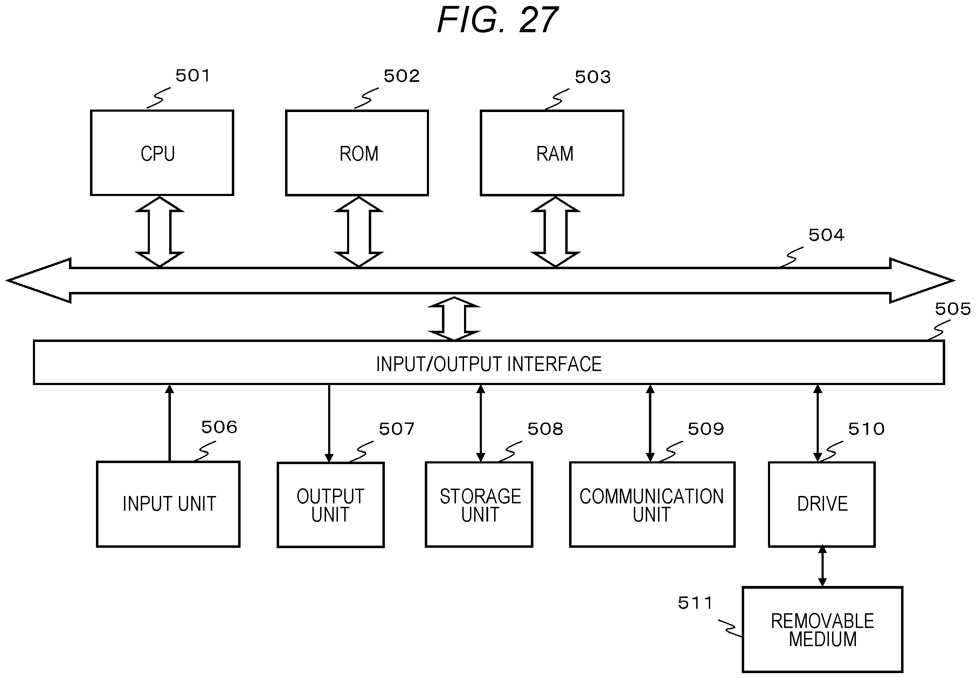

Next, a hardware configuration example of an information processing device constituting the MR glass, the shop terminal, the remote server, and the like that execute processing according to the above-described embodiment will be described with reference to Fig. 27.

Hardware illustrated in Fig. 27 is an example of a hardware configuration of the information processing device of the present disclosure, for example, the information processing device constituting the MR glass, the shop terminal, the remote server, and the like.

The hardware configuration illustrated in Fig. 27 will be described.

A central processing unit (CPU) 501 functions as a data processing unit that executes various processes according to a program stored in a read only memory (ROM) 502 or a storage unit 508. For example, processes according to the sequence described in the above-described embodiments are executed. A random access memory (RAM) 503 stores a program executed by the CPU 501, data, and the like. The CPU 501, the ROM 502, and the RAM 503 are mutually connected by a bus 504.

The CPU 501 is connected to an input/output interface 505 via the bus 504, and an input unit 506 including various sensors, a camera, a switch, a keyboard, a mouse, a microphone, and the like, and an output unit 507 including a display, a speaker, and the like are connected to the input/output interface 505.

The storage unit 508 connected to the input/output interface 505 includes, for example, a hard disk, and the like and stores programs executed by the CPU 501 and various data. A communication unit 509 functions as a data communication transmitting/receiving unit via a network such as the Internet or a local area network, and communicates with an external device.

A drive 510 connected to the input/output interface 505 drives a removable medium 511 such as a magnetic disk, an optical disc, a magneto-optical disk, or a semiconductor memory such as a memory card to record or read data.

### [8. Conclusion of configuration of present disclosure]

Hereinabove, the embodiments according to the present disclosure have been described in detail with reference to the specific embodiments. However, it is obvious that those skilled in the art can modify or substitute the embodiments without departing from the gist of the present disclosure. That is, the present invention has been disclosed in the form of exemplification, and should not be interpreted in a limited manner. In order to determine the scope of the present disclosure, the claims should be taken into consideration.

Note that the technology disclosed herein may have the following configurations.
(1) An information processing device including:
   a data processing unit configured to generate a mixed reality image to be output to a display unit of a glass worn by a user who enters a shop, in which
   the data processing unit
   determines a product to be presented in accordance with a user who enters the shop, and
   generates a mixed reality image that enables observation of a virtual object image of the determined product to be presented, together with a real object in the shop.
(2) The information processing device according to (1), in which
   a virtual object image of the product to be presented is a three-dimensional image of the product to be presented, and
   the data processing unit
   sequentially updates a virtual object image of the product to be presented in accordance with a motion of the glass, and generates a mixed reality image in which the product to be presented appears to be arranged in a product arrangement space that is a real object in the shop.
(3) The information processing device according to (2), in which
   the data processing unit
   analyzes a motion of the glass on the basis of at least any information among a captured image obtained by a camera mounted to the glass and detection information of an inertial measurement unit (IMU).
(4) The information processing device according to any one of (1) to (3), in which
   the data processing unit
   causes processing of taking out a real item of a product presented to a user as the virtual object image from a warehouse and delivering the real item to a user position in the shop, in response to a request from the user.
(5) The information processing device according to (4), in which
   the data processing unit
   causes a product delivery robot to execute product delivery processing.
(6) The information processing device according to (4) or (5), in which
   the data processing unit
   generates a virtual object image in which a color of a real item of a product delivered to the user position is changed, and outputs the virtual object image to the display unit of the glass worn by the user.
(7) The information processing device according to any one of (4) to (6), in which
   the data processing unit
   generates a virtual object image in which a real item of a product delivered to the user position is tried on by the user, and outputs the virtual object image to the display unit of the glass worn by the user.
(8) The information processing device according to any one of (1) to (7), in which
   the data processing unit
   determines a product to be presented in accordance with a shop type selected from a plurality of shop types by a user.
(9) The information processing device according to any one of (1) to (8), in which
   the data processing unit
   determines a product to be presented with reference to registration data in a database in which user preference information for each user is registered.
(10) The information processing device according to (9), in which
   a face image of a registered user is registered in the database, and
   the data processing unit
   executes collation processing between a captured image of a user who enters the shop and a face image registered in the database, to identify the user who enters the shop.
(11) The information processing device according to any one of (1) to (10), in which
   the glass worn by the user is a glass having a transmissive display unit, and
   the glass worn by the user is a glass that enables observation of a mixed reality image including a real object in the shop that can be observed with a naked eye through the transmissive display unit and a virtual object image displayed on the transmissive display unit.
(12) The information processing device according to any one of (1) to (11), in which
   the glass worn by the user is a glass having a non-transmissive display unit, and
   the glass worn by the user is a glass that enables observation of a mixed reality image including a real object image in the shop captured by the camera mounted to the glass and a display image of a virtual object image.
(13) The information processing device according to any one of (1) to (12), in which
   the data processing unit further
   generates a mixed reality image including a virtual object image of a product to be presented and a real object image in the shop, and outputs the mixed reality image to a display unit of a glass worn by an operator who serves the user, the virtual object image and the real object image being included in a mixed reality image output to the display unit of the glass worn by the user.
(14) The information processing device according to (13), in which a real object image in the shop output to the display unit of the glass worn by the operator is an image generated on the basis of a captured image obtained by a camera in the shop.
(15) The information processing device according to (13) or (14), in which
   in a case where the operator serves a plurality of users in the shop,
   the data processing unit
   generates a mixed reality image including virtual object images of different products to be presented, the different products to be presented being determined individually in accordance with the plurality of users in the shop, and the data processing unit outputs the mixed reality image to the display unit of the glass worn by the operator.
(16) The information processing device according to any one of (1) to (15), in which
   the data processing unit
   generates a mixed reality image including an avatar image of a salesclerk as a virtual object image, and the data processing unit outputs the mixed reality image to the display unit of the glass worn by the user.
(17) The information processing device according to (16), in which
   the information processing device further includes:
   a communication unit configured to receive an utterance to the avatar image from the user, and transmit an utterance to the user from an operator who serves the user.
(18) An information processing system including:
   a glass configured to enable observation of a mixed reality image; and
   a server configured to communicate with the glass, in which
   the glass is a glass worn by a user who enters a shop, and
   the server
   determines a product to be presented in accordance with a user who has entered the shop, and
   outputs a mixed reality image that enables observation of a virtual object image of the determined product to be presented, together with a real object in the shop, to a display unit of the glass worn by the user who has entered the shop.
(19) The information processing system according to (18), in which
   a virtual object image of the product to be presented is a three-dimensional image of the product to be presented, and
   the server
   sequentially updates a virtual object image of the product to be presented in accordance with a motion of the glass, and generates a mixed reality image in which the product to be presented appears to be arranged in a product arrangement space that is a real object in the shop.
(20) An information processing method to be executed in an information processing device,
   the information processing device including:
   a data processing unit configured to generate a mixed reality image to be output to a display unit of a glass worn by a user who enters a shop,
   the data processing method including,
   by the information processing unit:
      determining a product to be presented in accordance with a user who enters the shop; and
      generating a mixed reality image that enables observation of a virtual object image of the determined product to be presented, together with a real object in the shop.

A series of processing tasks described herein may be executed by hardware, software, or a composite configuration of both. In a case where processing is executed by software, it is possible to install a program in which a processing sequence is recorded, on a memory in a computer incorporated in dedicated hardware and execute the program, or it is possible to install and execute the program on a general-purpose personal computer that is capable of executing various types of processing. For example, the program can be recorded in advance in a recording medium. In addition to being installed in a computer from the recording medium, a program can be received via a network such as a local area network (LAN) or the Internet and installed in a recording medium such as an internal hard disk or the like.

Note that the various processes described herein may be executed not only in a chronological order in accordance with the description, but may also be executed in parallel or individually depending on processing capability of a device that executes the processing or depending on the necessity. Furthermore, a system herein described is a logical set configuration of a plurality of devices, and is not limited to a system in which devices of individual configurations are in the same housing.

### INDUSTRIAL APPLICABILITY

As described above, according to a configuration of an embodiment of the present disclosure, a device and a method are realized in which a virtual object image of a product determined according to a user who enters a shop can be presented to the user, and a real product item can also be provided.

Specifically, for example, a product to be presented is determined according to a user who enters a shop, and a mixed reality image in which a virtual object image of the determined product to be presented can be observed together with a real object in the shop is generated and output to a glass worn by the user who has entered the shop. The virtual object image of the product to be presented is sequentially updated according to a motion of the glass, and a mixed reality image is generated in which the product appears to be arranged in a product arrangement space in the shop. Moreover, in response to a request from the user, a real item of the product presented to the user is taken out from a warehouse and delivered to a user position in the shop.

This configuration realizes a device and a method in which a virtual object image of a product determined according to a user who enters a shop can be presented to the user, and a real product item can also be provided.

### REFERENCE SIGNS LIST

- 10: User
- 20: Shop
- 21: MR glass wearing area
- 22: Shop type selection unit
- 23: Product arrangement space
- 24: Shop cash register
- 25: Shop camera
- 30: Product warehouse
- 32: Product delivery robot
- 50: MR glass
- 60: Shop terminal
- 70: Remote server
- 71: Operator
- 72: MR glass
- 73: Remote cash register
- 81, 82: Virtual object
- 83: Real object
- 100: MR glass
- 101: Communication unit
- 102: Camera
- 103: Input unit
- 104: Voice output unit
- 105: Space recognition module
- 106: IMU
- 107: Image control unit (drawing module)
- 108: Display unit
- 150: Shop terminal
- 151: MR glass
- 152: Communication unit
- 153: Input unit
- 154: Output unit
- 155: Display unit
- 200: Remote server
- 201: MR glass
- 202: Communication unit
- 203: Input unit
- 204: Output unit
- 205: Display unit
- 400: Product delivery robot
- 401: Communication unit
- 402: Camera
- 403: Robot control unit
- 404: Drive unit
- 501: CPU
- 502: ROM
- 503: RAM
- 504: Bus
- 505: Input/output interface
- 506: Input unit
- 507: Output unit
- 508: Storage unit
- 509: Communication unit
- 510: Drive
- 511: Removable medium

## Claims

1. An information processing device comprising:
a data processing unit configured to generate a mixed reality image to be output to a display unit of a glass worn by a user who enters a shop, wherein
the data processing unit
determines a product to be presented in accordance with a user who enters the shop, and
generates a mixed reality image that enables observation of a virtual object image of the determined product to be presented, together with a real object in the shop.

2. The information processing device according to claim 1, wherein
a virtual object image of the product to be presented is a three-dimensional image of the product to be presented, and
the data processing unit
sequentially updates a virtual object image of the product to be presented in accordance with a motion of the glass, and generates a mixed reality image in which the product to be presented appears to be arranged in a product arrangement space that is a real object in the shop.

3. The information processing device according to claim 2, wherein
the data processing unit
analyzes a motion of the glass on a basis of at least any information among a captured image obtained by a camera mounted to the glass and detection information of an inertial measurement unit (IMU).

4. The information processing device according to claim 1, wherein
the data processing unit
causes processing of taking out a real item of a product presented to a user as the virtual object image from a warehouse and delivering the real item to a user position in the shop, in response to a request from the user.

5. The information processing device according to claim 4, wherein
the data processing unit
causes a product delivery robot to execute product delivery processing.

6. The information processing device according to claim 4, wherein
the data processing unit
generates a virtual object image in which a color of a real item of a product delivered to the user position is changed, and outputs the virtual object image to the display unit of the glass worn by the user.

7. The information processing device according to claim 4, wherein
the data processing unit
generates a virtual object image in which a real item of a product delivered to the user position is tried on by the user, and outputs the virtual object image to the display unit of the glass worn by the user.

8. The information processing device according to claim 1, wherein
the data processing unit
determines a product to be presented in accordance with a shop type selected from a plurality of shop types by a user.

9. The information processing device according to claim 1, wherein
the data processing unit
determines a product to be presented with reference to registration data in a database in which user preference information for each user is registered.

10. The information processing device according to claim 9, wherein
a face image of a registered user is registered in the database, and
the data processing unit
executes collation processing between a captured image of a user who enters the shop and a face image registered in the database, to identify the user who enters the shop.

11. The information processing device according to claim 1, wherein
the glass worn by the user is a glass having a transmissive display unit, and
the glass worn by the user is a glass that enables observation of a mixed reality image including a real object in the shop that can be observed with a naked eye through the transmissive display unit and a virtual object image displayed on the transmissive display unit.

12. The information processing device according to claim 1, wherein
the glass worn by the user is a glass having a non-transmissive display unit, and
the glass worn by the user is a glass that enables observation of a mixed reality image including a real object image in the shop captured by the camera mounted to the glass and a display image of a virtual object image.

13. The information processing device according to claim 1, wherein
the data processing unit further
generates a mixed reality image including a virtual object image of a product to be presented and a real object image in the shop, and outputs the mixed reality image to a display unit of a glass worn by an operator who serves the user, the virtual object image and the real object image being included in a mixed reality image output to the display unit of the glass worn by the user.

14. The information processing device according to claim 13, wherein a real object image in the shop output to the display unit of the glass worn by the operator is an image generated on a basis of a captured image obtained by a camera in the shop.

15. The information processing device according to claim 13, wherein
in a case where the operator serves a plurality of users in the shop,
the data processing unit
generates a mixed reality image including virtual object images of different products to be presented, the different products to be presented being determined individually in accordance with the plurality of users in the shop, and the data processing unit outputs the mixed reality image to the display unit of the glass worn by the operator.

16. The information processing device according to claim 1, wherein
the data processing unit
generates a mixed reality image including an avatar image of a salesclerk as a virtual object image, and the data processing unit outputs the mixed reality image to the display unit of the glass worn by the user.

17. The information processing device according to claim 16, wherein
the information processing device includes:
a communication unit configured to receive an utterance to the avatar image from the user, and transmit an utterance to the user from an operator who serves the user.

18. An information processing system comprising:
a glass configured to enable observation of a mixed reality image; and
a server configured to communicate with the glass, wherein
the glass is a glass worn by a user who enters a shop, and
the server
determines a product to be presented in accordance with a user who has entered the shop, and
outputs a mixed reality image that enables observation of a virtual object image of the determined product to be presented, together with a real object in the shop, to a display unit of the glass worn by the user who has entered the shop.

19. The information processing system according to claim 18, wherein
a virtual object image of the product to be presented is a three-dimensional image of the product to be presented, and
the server
sequentially updates a virtual object image of the product to be presented in accordance with a motion of the glass, and generates a mixed reality image in which the product to be presented appears to be arranged in a product arrangement space that is a real object in the shop.

20. An information processing method to be executed in an information processing device,
the information processing device including:
a data processing unit configured to generate a mixed reality image to be output to a display unit of a glass worn by a user who enters a shop,
the data processing method comprising,
by the information processing unit:
determining a product to be presented in accordance with a user who enters the shop; and
generating a mixed reality image that enables observation of a virtual object image of the determined product to be presented, together with a real object in the shop.
